(19) Europäisches Patentamt
European Patent Office
Office européen des brevets

(11) **EP 4 787 843 A1**

(12) **EUROPEAN PATENT APPLICATION**
published in accordance with Art. 153(4) EPC

(43) Date of publication:
**05.08.2026 Bulletin 2026/32**

(21) Application number: **23953736.8**

(22) Date of filing: **28.09.2023**

(51) International Patent Classification (IPC):
***H04N 19/176*** (2014.01)

(52) Cooperative Patent Classification (CPC):
**H04N 19/176**

(86) International application number:
**PCT/CN2023/122804**

(87) International publication number:
**WO 2025/065590 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **ZHANG, Lai
Dongguan, Guangdong 523860 (CN)**

(74) Representative: **RGTH
Patentanwälte PartGmbB
Mönckebergstraße 11
20095 Hamburg (DE)**

(54) **ENCODING METHOD, DECODING METHOD, ENCODER, DECODER, AND STORAGE MEDIUM**

(57) Provided in embodiments of the present application are an encoding method, a decoding method, an encoder, a decoder, and a storage medium. The decoding method comprises: performing intra template matching prediction on a current block, so as to determine a predicted block and motion information of the current block; on the basis of the predicted block of the current block and a residual block of the current block, determining a reconstructed block of the current block; and storing the motion information of the current block into a motion information buffer corresponding to the current block, wherein the motion information in the motion information buffer is used for constructing a candidate merge set for a target block, and the target block is predicted on the basis of intra block copy.

Perform intra template matching prediction on a current block to determine a prediction block and motion information of the current block ⸺ S1410

Determine a reconstructed block of the current block based on the prediction block of the current block and a residual block of the current block ⸺ S1420

Store the motion information of the current block in a motion information buffer corresponding to the current block ⸺ S1430

FIG. 14

**Description**

**TECHNICAL FIELD**

This application relates to the field of video encoding and decoding technologies, and in particular, to an encoding method, a decoding method, an encoder, a decoder, and a storage medium.

**BACKGROUND**

Prediction techniques based on intra block copy (intra block copy, IBC) are currently widely applied in various encoding and decoding standards. How to improve prediction performance for IBC blocks remains a problem to be solved.

**SUMMARY**

Embodiments of this application provide an encoding method, a decoding method, an encoder, a decoder, and a storage medium, to improve prediction performance for IBC blocks. The following describes the aspects related to this application.

According to a first aspect, there is provided a decoding method. The decoding method is applied to a decoder, and includes: performing intra template matching prediction on a current block to determine a prediction block and motion information of the current block; determining a reconstructed block of the current block based on the prediction block of the current block and a residual block of the current block; and storing the motion information of the current block into a motion information buffer corresponding to the current block, where the motion information in the motion information buffer is used for constructing a merge candidate set for a target block, and prediction of the target block is based on intra block copy.

According to a second aspect, there is provided an encoding method. The encoding method is applied to an encoder, and includes: performing intra template matching prediction on a current block to determine a prediction block and motion information of the current block; determining a residual block of the current block based on the prediction block of the current block; and storing the motion information of the current block into a motion information buffer corresponding to the current block, where the motion information in the motion information buffer is used for constructing a merge candidate set for a target block, and prediction of the target block is based on intra block copy.

According to a third aspect, there is provided a decoder. The decoder includes: a first decoding unit, configured to perform intra template matching prediction on a current block to determine a prediction block and motion information of the current block; a second decoding unit, configured to determine a reconstructed block of the current block based on the prediction block of the current block and a residual block of the current block; and a storage unit, configured to store the motion information of the current block into a motion information buffer corresponding to the current block, where the motion information in the motion information buffer is used for constructing a merge candidate set for a target block, and prediction of the target block is based on intra block copy.

According to a fourth aspect, there is provided a decoder. The decoder includes: a memory, configured to store a computer program; and a processor, configured to execute the method according to the first aspect when running the computer program.

According to a fifth aspect, there is provided an encoder. The encoder includes: a first encoding unit, configured to perform intra template matching prediction on a current block to determine a prediction block and motion information of the current block; a second encoding unit, configured to determine a residual block of the current block based on the prediction block of the current block; and a storage unit, configured to store the motion information of the current block into a motion information buffer corresponding to the current block, where the motion information in the motion information buffer is used for constructing a merge candidate set for a target block, and prediction of the target block is based on intra block copy.

According to a sixth aspect, there is provided an encoder. The encoder includes: a memory, configured to store a computer program; and a processor, configured to execute the method according to the second aspect when running the computer program.

According to a seventh aspect, there is provided a computer-readable storage medium, where the computer-readable storage medium stores a computer program, and the computer program, when executed, causes the method according to the first aspect or the second aspect to be implemented.

According to an eighth aspect, there is provided a computer program product, where the computer program product includes a computer program, and the computer program, when executed, causes the method according to the first aspect or the second aspect to be implemented.

According to a ninth aspect, there is provided a recording method for recording a bitstream into a recording medium, where the recording method includes a recording step of recording, into the recording medium, a bitstream generated by using the encoding method according to the second aspect.

According to a tenth aspect, there is provided a computer-readable storage medium, where the computer-readable storage medium stores a bitstream generated by using the encoding method according to the second aspect.

In embodiments of this application, a merge set (merge list) for IBC blocks is constructed based on motion information of a current block (that is, a picture block based on intra template matching prediction), thereby enriching information sources of the merge set for the IBC blocks, and improving prediction performance for the IBC blocks.

**BRIEF DESCRIPTION OF DRAWINGS**

FIG. 1 is a schematic structural diagram of a video encoder to which embodiments of this application are applicable.

FIG. 2 is a schematic structural diagram of a video decoder to which embodiments of this application are applicable.

FIG. 3 is an example diagram of an implementation of an intra template matching prediction (intra template matching prediction, IntraTMP) technique.

FIG. 4 is an example diagram of a BV and a template difference.

FIG. 5 is a schematic diagram of an implementation of an IntraTMP adaption for camera-captured content (IntraTMP adaption for camera-captured content) technique.

FIG. 6 is a schematic diagram of an implementation of an IntraTMP multi-candidate technique.

FIG. 7 is a schematic diagram of a filter of an IntraTMP filtering technique.

FIG. 8 is an example diagram of a manner of determining filter coefficients in an IntraTMP filtering technique.

FIG. 9 is an example diagram of a partitioning manner of picture blocks in a combined inter and intra prediction (combined inter and intra prediction, CIIP) technique.

FIG. 10 is a schematic diagram of an implementation of a local illumination compensation (local illumination compensation, LIC) technique.

FIG. 11 is an example diagram illustrating positional relationships between neighboring candidates and non-neighboring candidates of a current block in Inter-Merge.

FIG. 12 is an example diagram of a template of a current block and a template of a reference block.

FIG. 13 is an example diagram of a transformation process of a template of a reference block.

FIG. 14 is a schematic flowchart of a decoding method according to an embodiment of this application.

FIG. 15 is a schematic flowchart of an encoding method according to an embodiment of this application.

FIG. 16 is a schematic structural diagram of a decoder according to an embodiment of this application.

FIG. 17 is a schematic structural diagram of a decoder according to another embodiment of this application.

FIG. 18 is a schematic structural diagram of an encoder according to an embodiment of this application.

FIG. 19 is a schematic structural diagram of an encoder according to another embodiment of this application.

FIG. 20 is a schematic flowchart of a recording method according to an embodiment of this application.

**DESCRIPTION OF EMBODIMENTS**

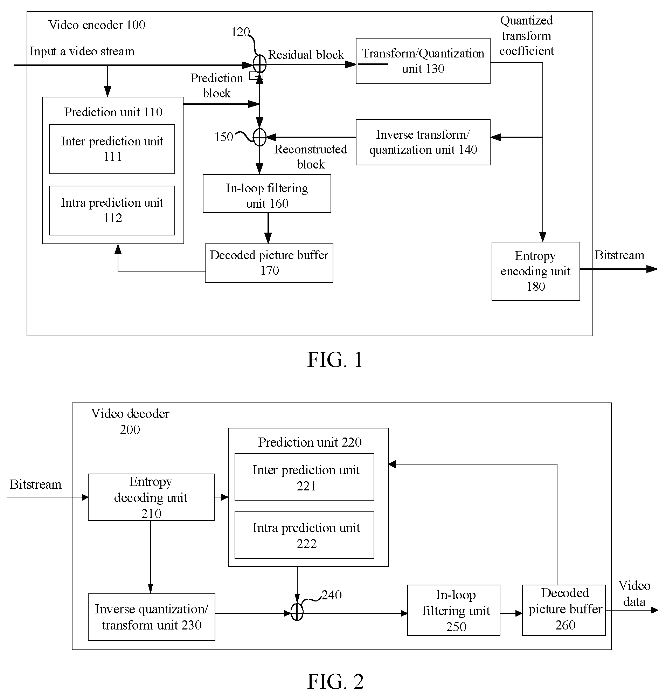

FIG. 1 is a schematic block diagram of a video encoder according to an embodiment of this application.

It should be understood that, the video encoder 100 may be configured to perform lossy compression (lossy compression) on a picture, and may also be configured to perform lossless compression (lossless compression) on a picture. The lossless compression may be visually lossless compression (visually lossless compression), or may be mathematically lossless compression (mathematically lossless compression).

The video encoder 100 may be applied to picture data in a luminance-chrominance (YCbCr, YUV) format. For example, a YUV ratio may be 4:2:0, 4:2:2, or 4:4:4. Y denotes luma (Luma), Cb (U) denotes blue chroma, Cr (V) denotes red chroma, and U and V denote chroma (Chroma) used for describing color and saturation. For example, in a color format, 4:2:0 represents that every four pixels have four luma samples and two chroma samples (YYYYCbCr), 4:2:2 represents that every four pixels have four luma samples and four chroma samples (YYYYCbCrCbCr), and 4:4:4 represents full pixel display (YYYYCbCrCbCrCbCrCbCr).

For example, the video encoder 100 reads video data and partitions each frame of picture in the video data into several coding tree units (coding tree unit, CTU). In some examples, a CTB may be referred to as a "tree block", a "largest coding unit" (Largest Coding unit, LCU for short), or a "coding tree block" (coding tree block, CTB for short). Each CTU may be associated with pixel blocks of a same size within a picture. Each pixel may correspond to one luma (luminance or luma) sample and two chroma (chrominance or chroma) samples. Therefore, each CTU may be associated with one luma sample block and two chroma sample blocks. A CTU size is, for example, 128×128, 64×64, 32×32, or the like. A CTU may be further partitioned into a plurality of coding units (Coding Unit, CU) for encoding, and each CU may be a rectangular block or a square block. A CU may be further partitioned into prediction units (prediction Unit, PU for short) and transform units (transform unit, TU for short), thereby separating encoding, prediction, and transform from each other to allow for more flexible processing. In an example, a CTU is partitioned into CUs by using a quadtree structure, and each CU is partitioned into TUs and PUs by using a quadtree structure.

Video encoders and video decoders can support various PU sizes. Assuming that a particular CU size is $2N\times2N$, the video encoder and the video decoder may support PU sizes of $2N\times2N$ or $N\times N$ for intra prediction, and may support symmetric PU sizes of $2N\times2N$, $2N\times N$, $N\times2N$, $N\times N$, or similar sizes for inter prediction. The video encoder and the video decoder may also support asymmetric PU sizes of $2N\times nU$, $2N\times nD$, $nL\times2N$, and $nR\times2N$ for inter prediction.

In some embodiments, as shown in FIG. 1, the video encoder 100 may include a prediction unit 110, a residual unit 120, a transform/quantization unit 130, an inverse transform/quantization unit 140, a reconstruction unit 150, an in-loop filtering unit 160, a decoded picture buffer 170, and an entropy encoding unit 180. It should be noted that, the video encoder 100 may include more, fewer, or different functional components.

Optionally, in this application, a current block (current block) may be referred to as a current coding unit (CU), a current prediction unit (PU), or the like. A prediction block may also be referred to as a prediction picture block or a picture prediction block, and a reconstructed picture block may also be referred to as a reconstructed block or a picture reconstructed block.

In some embodiments, the prediction unit 110 includes an inter prediction unit 111 and an intra prediction unit 112. Due to a strong correlation between neighboring pixels within a picture in a video, an intra prediction method is used in video encoding and decoding technologies to eliminate spatial redundancy between neighboring pixels. Due to strong similarity between neighboring pictures in a video, an inter prediction method is used in video encoding and decoding technologies to eliminate temporal redundancy between neighboring pictures, thereby improving encoding efficiency.

The inter prediction unit 111 may be configured to perform inter prediction. The inter prediction may include motion estimation (motion estimation) and motion compensation (motion compensation), and picture information of different pictures may be referenced. In inter prediction, a reference block is found in a reference picture based on motion information, and a prediction block is generated based on the reference block to eliminate temporal redundancy. In inter prediction, a reference block is found in a reference picture based on motion information, and a prediction block is generated based on the reference block. The motion information includes a reference picture list where the reference picture is located, a reference picture index, and a motion vector. The motion vector may point to an integer pixel location or a fractional pixel location. In a case that the motion vector points to a fractional pixel location, interpolation filtering is required to be performed on a reference picture to generate a required block at a fractional-pixel location. Herein, a block at an integer pixel location or fractional pixel location, in the reference picture, found based on the motion vector is referred to as a reference block. In some technologies, a reference block is directly used as a prediction block. In some other technologies, further processing is performed on the reference block to generate a prediction block. Further processing being performed on the reference block to generate a prediction block may also be understood as using the reference block as the prediction block and then performing further processing on the prediction block to generate a new prediction block.

The intra prediction unit 112 predicts pixel information within a current coding picture block by referring only to information within a same frame of picture, so as to eliminate spatial redundancy.

For intra prediction, there are a plurality of prediction modes. For example, according to the H-series international digital video coding standards, the H.264/AVC standard defines 8 angular prediction modes and 1 non-angular prediction mode, and the H.265/HEVC standard extends this to 33 angular prediction modes and 2 non-angular prediction modes. Intra prediction modes used in HEVC include a planar mode (Planar), a DC mode, and 33 angular modes, totaling 35 prediction modes. Intra modes used in VVC include a planar mode, a DC mode, and 65 angular modes, totaling 67 prediction modes.

It should be noted that, as a quantity of angular modes increases, intra prediction becomes more precise, and better meets requirements arising from development of high-definition and ultra-high-definition digital videos.

The residual unit 120 may generate a residual block of a CU based on a pixel block of the CU and a prediction block of a PU of the CU. For example, the residual unit 120 may generate the residual block of the CU such that each sample within the residual block has a value equal to a difference between the following two: a sample within the pixel block of the CU and a corresponding sample within the prediction block of the PU of the CU.

The transform/quantization unit 130 may quantize a transform coefficient. The transform/quantization unit 130 may quantize a transform coefficient associated with a TU of the CU based on a quantization parameter (QP) value associated with the CU. The video encoder 100 may adjust, by adjusting the QP value associated with the CU, a degree of quantization applied to the transform coefficient associated with the CU.

The inverse transform/quantization unit 140 may apply inverse quantization and inverse transform to the quantized transform coefficient to reconstruct the residual block from the quantized transform coefficient.

The reconstruction unit 150 may add a sample of the reconstructed residual block to a sample corresponding to one or more prediction blocks generated by the prediction unit 110, to generate a reconstructed picture block associated with the TU. In this way, a sample block of each TU of the CU is reconstructed, and the video encoder 100 can reconstruct a pixel block of the CU.

The in-loop filtering unit 160 is configured to process pixels subjected to inverse transform and inverse quantization, to compensate for distortion information, thereby providing better reference for subsequent coding pixels. For example, the in-loop filtering unit 160 may execute a deblocking filtering operation to reduce blocking artifacts of a pixel block associated with the CU.

In some embodiments, the in-loop filtering unit 160 includes a deblocking filtering unit and a sample adaptive offset/adaptive loop filtering (SAO/ALF) unit, where the deblocking filtering unit is configured to remove block artifacts and the SAO/ALF unit is configured to remove ringing artifacts.

The decoded picture buffer 170 may store the reconstructed pixel block. The inter prediction unit 111 may perform inter prediction on a PU of another picture by using a reference picture including the reconstructed pixel block. In addition, the intra prediction unit 112 may perform intra prediction on another PU in a same picture as the CU by using the reconstructed pixel block in the decoded picture buffer 170.

The entropy encoding unit 180 may receive the quantized transform coefficient from the transform/quantization unit 130. The entropy encoding unit 180 may perform one or more entropy encoding operations on the quantized transform coefficient to generate entropy encoded data.

FIG. 2 is a schematic block diagram of a video decoder according to an embodiment of this application.

As shown in FIG. 2, the video decoder 200 includes an entropy decoding unit 210, a prediction unit 220, an inverse quantization/transform unit 230, a reconstruction unit 240, an in-loop filtering unit 250, and a decoded picture buffer 260. It should be noted that the video decoder 200 may include more, fewer, or different functional components.

The video decoder 200 may receive a bitstream. The entropy decoding unit 210 may parse the bitstream to extract a syntax element from the bitstream. As part of parsing of the bitstream, the entropy decoding unit 210 may parse an entropy encoded syntax element in the bitstream. The prediction unit 220, the inverse quantization/transform unit 230, the reconstruction unit 240, and the in-loop filtering unit 250 may decode video data based on the syntax element extracted from the bitstream, that is, generate decoded video data.

In some embodiments, the prediction unit 220 includes an intra prediction unit 222 and an inter prediction unit 221.

The intra prediction unit 222 may perform intra prediction to generate a prediction block of a PU. The intra prediction unit 222 may generate the prediction block of the PU based on a pixel block of a spatially adjacent PU by using an intra prediction mode. The intra prediction unit 222 may also determine an intra prediction mode of the PU based on one or more syntax elements parsed from the bitstream.

The inter prediction unit 221 may construct a first reference picture list (list 0) and a second reference picture list (list 1) based on the syntax element parsed from the bitstream. In addition, if inter prediction encoding is used for the PU, the entropy decoding unit 210 may parse motion information of the PU. The inter prediction unit 221 may determine one or more reference blocks of the PU based on the motion information of the PU. The inter prediction unit 221 may generate a prediction block of the PU based on the one or more reference blocks of the PU.

The inverse quantization/transform unit 230 may perform inverse quantization (that is, de-quantization) on a transform coefficient associated with the TU. The inverse quantization/transform unit 230 may determine a degree of quantization by using a QP value associated with a CU of the TU.

After the transform coefficient is inversely quantized, the inverse quantization/transform unit 230 may apply one or more inverse transforms to the inversely quantized transform coefficient, to generate a residual block associated with the TU.

The reconstruction unit 240 reconstructs a pixel block of the CU by using the residual block associated with the TU of the CU and a prediction block of a PU of the CU. For example, the reconstruction unit 240 may add a sample of the residual block to a corresponding sample of the prediction block, to reconstruct the pixel block of the CU, to obtain a reconstructed picture block.

The in-loop filtering unit 250 may perform a deblocking filtering operation to reduce block artifacts of the pixel block associated with the CU.

The video decoder 200 may store a reconstructed picture of the CU in the decoded picture buffer 260. The video decoder 200 may use the reconstructed picture in the decoded picture buffer 260 as a reference picture for subsequent prediction, or transmit the reconstructed picture to a display apparatus for display.

A basic process of video encoding and decoding is as follows: At an encoding end, one frame of picture is partitioned into blocks. For a current block, the prediction unit 110 generates a prediction block of the current block through intra prediction or inter prediction. The residual unit 120 may calculate a residual block based on the prediction block and an original block of the current block, that is, a difference between the prediction block and the original block of the current block. The residual block may also be referred to as residual information. The residual block is subjected to procedures such as transform and quantization by the transform/quantization unit 130, which may remove information imperceptible to human eyes, to eliminate visual redundancy. Optionally, the residual block before transform and quantization by the transform/quantization unit 130 may be referred to as a time-domain residual block, and the time-domain residual block subjected to transform and quantization by the transform/quantization unit 130 may be referred to as a frequency residual block or a frequency-domain residual block. After receiving a quantized transform coefficient output by the transform/-

quantization unit 130, the entropy encoding unit 180 may perform entropy encoding on the quantized transform coefficient, to output a bitstream. For example, the entropy encoding unit 180 may eliminate character redundancy based on a target context model and probability information of a binary bitstream.

At a decoding end, the entropy decoding unit 210 may parse the bitstream to obtain prediction information of the current block, a quantized coefficient matrix, and the like; and the prediction unit 220 may perform intra prediction or inter prediction on the current block based on the prediction information to generate a prediction block of the current block. The inverse quantization/transform unit 230 performs inverse quantization and inverse transform on the quantized coefficient matrix obtained from the bitstream, to generate a residual block. The reconstruction unit 240 adds the prediction block and the residual block to obtain a reconstructed block. Reconstructed blocks form a reconstructed picture, and the in-loop filtering unit 250 performs in-loop filtering on the reconstructed picture on a picture basis or on a block basis to obtain a decoded picture. The encoding end is also required to perform similar operations as the decoding end to obtain the decoded picture. The decoded picture may also be referred to as a reconstructed picture. The reconstructed picture may serve as a reference picture for inter prediction of subsequent pictures.

It should be noted that block partitioning information determined by the encoding end, and mode information or parameter information such as prediction, transform, quantization, entropy encoding, and in-loop filtering, are carried in the bitstream when necessary. The decoding end determines the same block partitioning information and mode information or parameter information such as prediction, transform, quantization, entropy encoding, and in-loop filtering as the encoding end by parsing the bitstream or analyzing existing information, thereby ensuring that the decoded picture obtained at the encoding end is the same as the decoded picture obtained at the decoding end.

The foregoing describes basic processes of the video encoder and the video decoder under a block-based hybrid encoding framework. With development of technologies, some modules or steps of the framework or processes may be optimized. This application is applicable to the basic processes of the video encoder and the video decoder under the block-based hybrid encoding framework, but is not limited to the framework and processes.

The foregoing describes in detail the encoding and decoding framework provided in embodiments of this application. This application mainly relates to the intra prediction unit in the encoder and decoder mentioned above. Related concepts in embodiments of this application are described in detail below.

**IntraTMP technique**

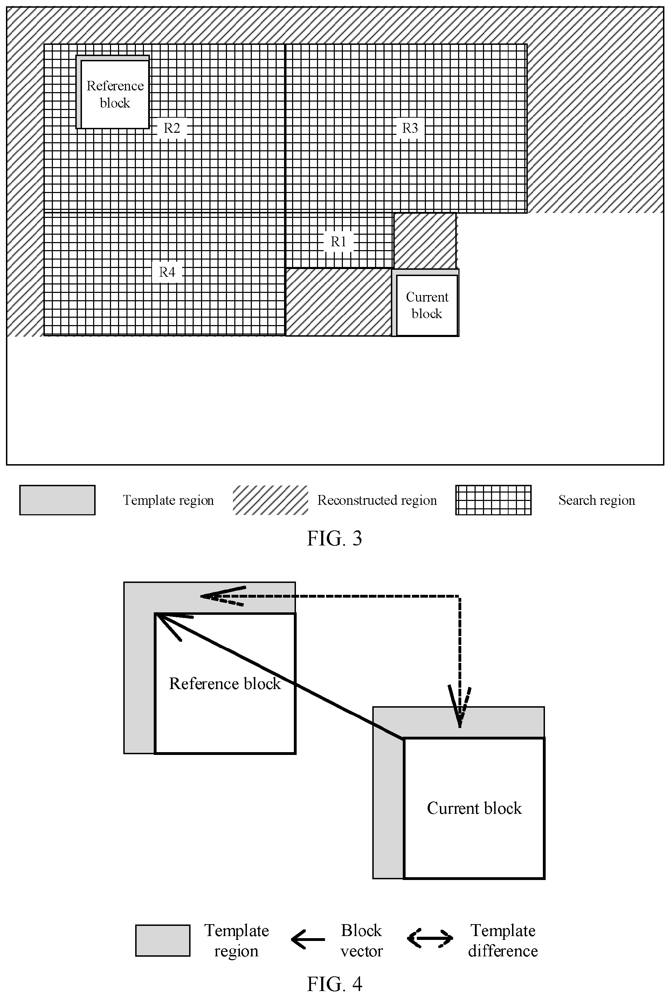

IntraTMP is a special intra prediction encoding method, and is mainly applied to screen content encoding. IntraTMP may be implemented through the following process described. First, reconstructed pixels in an L-shaped portion neighboring to a current block are used as a template, and a reconstructed region in a current frame is searched for the most similar template. Then, a reconstructed block corresponding to the most similar template may be used as a reference block (or matching block), and used as a prediction block for the current block. As shown in FIG. 3, R1 to R4 in FIG. 3 indicate available IntraTMP search regions. Next, these regions may be searched in sequence at every pixel location in raster scan (raster scan) order for a reference block.

Referring to FIG. 4, the reference block may be represented by a block vector (block vector, BV) pointing from the current block to the reference block, and a similarity between templates may be represented by magnitude of a template difference. A smaller template difference between two templates indicates a greater similarity between the two templates. In an example, a template difference may be calculated based on a sum of absolute difference (sum of absolute difference, SAD). A smaller SAD between two templates indicates a greater similarity between the two templates.

The encoder and the decoder may indicate, by using a flag (for example, intra_tmp_flag), whether the current block is encoded using an IntraTMP mode. If the current block is encoded using the IntraTMP mode, a same template matching process may be performed at the decoding end, thereby obtaining the same prediction block at the decoding end, without additionally encoding the BV pointing from the current block to the reference block.

**IntraTMP adaption for camera-captured content (IntraTMP adaption for camera-captured content) technique**

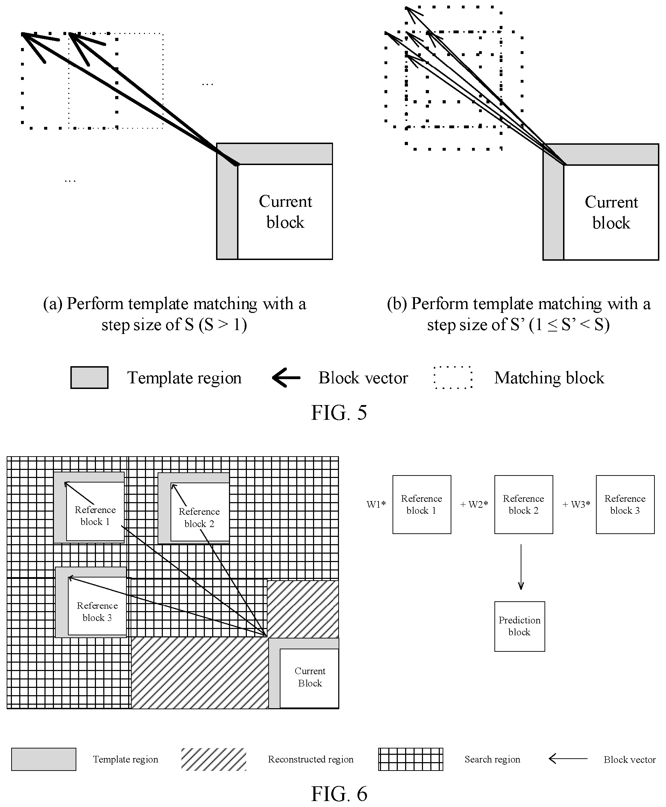

The IntraTMP adaption for camera-captured content technique, on the basis of the original IntraTMP technique, performs template matching (as illustrated in part (a) of FIG. 5) with a step size of S (S > 1). Within a search region, this technique does not search for a reference block at every pixel location in raster scan order. Instead, this technique searches for a reference block in the search region at intervals horizontally and vertically with a step size of S. For example, assuming that a BV currently used for template matching is (X0, Y0), a next BV for template matching is (X0+S, Y0). A vertical coordinate of a BV in a next row for template matching should be Y0+S. After template matching is completed, the best reference block may be searched for through a finer search within a specific range. For example, as shown in part (b) of FIG. 5, in the finer search process, template matching may be performed with a smaller step size of S', to optimize a matching result. This technique effectively reduces complexity of the IntraTMP mode while maintaining relatively good encoding efficiency.

**IntraTMP multi-candidate technique**

The IntraTMP multi-candidate technique may acquire N candidate reference blocks in a search region through a template matching process, or in other words, constructs a candidate reference block list with a length of N. Candidate reference blocks in the list may be ranked according to magnitude of template differences between the candidate reference blocks and the current block. A candidate block in the list is selected based on an index of the candidate block, and is used as a final prediction block. For a coding block for which the IntraTMP multi-candidate technique is used, as shown in the code below, after decoding an IntraTMP flag intra_tmp_flag as true (true), a syntax element intra_tmp_idx may be further decoded. This syntax element may indicate an index of a candidate reference block selected by the encoder.

```
intra_tmp_flag
if(intra_tmp_flag)
{
intra_tmp_idx
}
```

An example of a template matching process used for constructing a candidate reference block list is provided below.

In a first step, a first search is performed with a specific step size. For example, both a horizontal step size and a vertical step size are set to 4, so that N optimal candidate reference blocks with a spacing (for example, top N candidate reference blocks with the smallest template differences) may be obtained.

In a second step, a second search is performed within regions neighboring to the N candidate reference blocks obtained in the first step. These neighboring regions may be set to a plurality of non-overlapping regions based on the step sizes in the first step. M optimal candidate reference blocks (which may include the candidate reference blocks obtained in the first step) are obtained from these regions.

A same construction process is performed at an encoding end and a decoding end to obtain the same candidate reference block list.

Intra_tmp_idx may be encoded using either fixed-length encoding or variable-length encoding. For example, Intra_tmp_idx may be encoded using truncated binary (truncated binary) encoding.

A possible variable-length encoding method for Intra_tmp_idx is provided below.

A smaller index (a smaller intra_tmp_idx value) indicates a smaller template difference of a corresponding candidate block, and a greater probability of being selected statistically. Shorter codewords may be set for smaller intra_tmp_idx values. For example:

| intra_tmp_idx | Binary symbol | |
|---|---|---|
| 0 | 1 | |
| 1 | 0 | 1 |
| 2 | 0 | 0 |
| Bin index (Binary symbol index) | 0 | 1 |

In a case that a maximum value N of intra_tmp_idx is relatively large, codewords of a same length may be assigned to relatively large intra_tmp_idx values. For example, as shown in the following table, if N is 15, codewords of a same length may be assigned to indexes 3 to 6 or 7 to 14.

| Intra_tmp_i dx | Binary symbol | | | |
|---|---|---|---|---|
| 0 | 1 | 1 | | |
| 1 | 1 | 0 | 0 | |
| 2 | 1 | 0 | 1 | |
| 3 to 6 | 0 | x | x | x |
| 7 to 14 | 0 | x | x | x | x |

In the above table, x may be obtained using truncated binary encoding.

**IntraTMP fusion prediction technique**

Through intra template matching, template differences between reconstructed blocks at different locations and a current block may be obtained. These reconstructed blocks may be represented by BVs pointing from the current block to the reconstructed blocks. A candidate BV list may be constructed to record BVs with relatively small template differences during the template matching process. Then, one or more BVs may be selected from the candidate BV list based on conditions such as a spacing between BVs and template differences, and reconstructed blocks pointed to by selected BVs are used as reference blocks for the current block. Next, a weight value may be determined for each reference block. Weighted fusion is performed on these reference blocks based on the weight values of the reference blocks to obtain a final prediction block. The above process illustrates an IntraTMP fusion prediction process. For the IntraTMP fusion prediction process, reference may also be made to FIG. 6.

A quantity of reference blocks to be fused may be a fixed value, or may be determined based on the relative magnitudes of the template differences of the reference blocks. For example, for N available reference blocks, a threshold may be set as: Threshold = minSAD << 1, where minSAD is a minimum value of the template differences of these reference blocks. Only reference blocks whose template differences are less than or equal to the threshold are used in the fusion process. In this manner, reference blocks to be used for fusion may be determined.

After the reference blocks to be for fusion are determined, a weight value of each reference block may be determined based on a preset fixed value, a template difference, and template-based derivation.

**IntraTMP filtering**

Reference blocks obtained through intra template matching may be directly used as prediction blocks for a current block. Alternatively, filtering may be performed on the prediction blocks to improve prediction performance. In an implementation process, whether filtering is applied to a prediction block for the current block may be indicated by using a block-level flag.

Various forms of filters may be used. A possible filter form is as follows:

$$PredC = c0C + c1N + c2S + c3E + c4W + c5B.$$

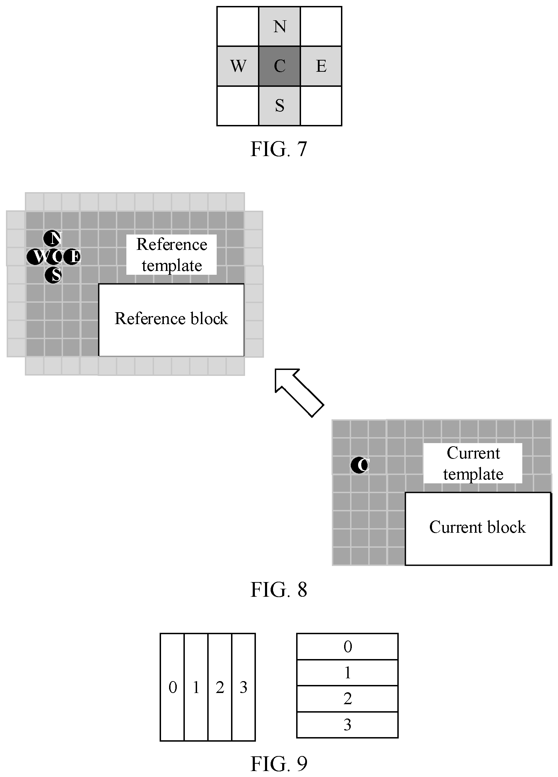

In which, C denotes a pixel to be filtered, N denotes a pixel above C, S denotes a pixel below C, W denotes a pixel to the left of C, and E denotes a pixel to the right of C, as illustrated in FIG. 7. B(Bias) is a fixed value. For example, B denotes a median value within a pixel range. c0 to c5 are filter coefficients.

A manner of determining filter coefficients is to train filter coefficients using a reference block template and a current block template. For example, referring to FIG. 8, a template region is a reconstructed region consisting of four rows above the current block and four columns to the left of the current block. For a reference block, a region consisting of an additional row at each of locations above, below, to the left of, and to the right of the template region is further required as a reference. If some of the additional regions have not yet been encoded, the template region may be duplicated to obtain additional regions.

A manner of training the filter coefficients is to calculate a set of coefficients such that a mean square error (mean square error, MSE) between a filtered reference block template and the current block template is minimized.

If IntraTMP filtering is applied to the current block, the reference block may be filtered. A filtering manner is to sequentially filter each pixel in the reference block in order from left to right and from top to bottom. Then, a filtered value may be used as a predicted value.

**Template-derived IntraTMP fusion**

In IntraTMP fusion prediction, a plurality of reference blocks may be obtained through an intra template matching process, and weighted fusion may be performed on these reference blocks. Weight values are typically predefined fixed values or calculated based on template differences of the reference blocks. For example, the template differences of the reference blocks are respectively SAD1 to SADn, and a method for calculating the weight values is as follows:

$$SADi = (SADi == 0) \; ? \; 1 : SADi$$

$$SUM = \sum_{i=1}^{n} SAD_i$$

$$Wi = ( SUM - SADi ) / (( n - 1 ) * SUM )$$

In which, n denotes a total quantity of reference blocks, and Wi denotes a weight value corresponding to a reference block with a template difference of SADi. A form of a prediction block after weighted fusion may be expressed as follows:

$$Pred = \sum_{i=1}^{n} Wn*Predn$$

In the template-derived IntraTMP fusion method, a method similar to filter coefficient training is used, in which weights used for fusion prediction are obtained by training based on reference block templates and a current block template. For example, weighted fusion may be performed on five reference blocks to determine the prediction block, as follows:

$$Pred = \sum_{n=0}^{4} w_n*refBlock_n + w_5*Bias$$

A method for calculating weights is to calculate a set of coefficients such that an MSE between a fused reference block template and the current block template is minimized.

**Template-based intra mode derivation (Template-Based Intra Mode Derivation, TIMD) technique**

The TIMD technique uses reconstructed pixels in an L-shaped portion neighboring to a current block as a template. By traversing a most probable mode (most probable mode, MPM) list, prediction pixels in a template region in different intra prediction modes are calculated, thereby obtaining template differences between the prediction pixels in different intra prediction modes and the reconstructed pixels. The template differences may be represented by a sum of absolute transformed difference (sum of absolute transformed difference, SATD). Then, an optimal intra prediction mode may be selected based on the template differences. At a decoding end, the intra prediction mode is obtained by using a same derivation method, thereby reducing bits required for encoding mode information.

**CIIP technique**

The CIIP technique obtains a prediction block of a current block through a weighted combination of an intra prediction block and an inter prediction block, by jointly utilizing intra prediction and inter prediction. In the ECM, the CIIP is combined with template-based prediction techniques. Different regions are assigned different weight values, further improving prediction accuracy. For example, an intra prediction block pred_intra may be obtained using a TIMD mode, and an inter prediction block pred_inter may be obtained using a template-based Merge mode. Weight values wIntra and wInter may be determined based on the derived intra prediction mode and locations of pixels to be predicted. A final prediction block Pred may be calculated according to the following formula:

$$Pred = (wIntra * pred\_intra + wInter * pred\_inter + 4) >> 3$$

In which, wIntra and wInter may be determined based on the intra prediction mode intra_dir derived by TIMD. In the ECM, there are 65 intra angular prediction modes ($2 \le intra\_dir <= 66$), and when $2 \le intra\_dir < 34$, a current block is partitioned vertically into four equal parts; and when $34 <= intra\_dir <= 66$, the current block is partitioned horizontally into four equal parts. Weight values wIntra and wInter of each region are as follows:

| Region index | (wIntra, wInter) |
|---|---|
| 0 | (6, 2) |
| 1 | (5, 3) |
| 2 | (3, 5) |

(continued)

| Region index | (wIntra, wInter) |
|:---:|:---:|
| 3 | (2, 6) |

Under vertical or horizontal division into four equal parts, indexes of the regions are as shown in FIG. 9.

When intra_dir is equal to 0 or 1, the current block is not partitioned into sub-regions. wIntra and wInter are selected from (3, 1), (2, 2), and (1, 3) based on encoding types (intra or inter) of two coding blocks to the left of and above the current block.

**IBC**

IBC is an intra prediction technique that obtains prediction pixels based on block matching. Similar to inter prediction, in IBC, prediction is implemented using a BV pointing from a current block to a reference block. A difference lies in that, in inter prediction, a reference block comes from an encoded reconstructed frame, while in IBC, a reference block comes from a reconstructed portion of a current frame. The BV is required to be transmitted in a bitstream. Therefore, similar to intra prediction, the IBC technique includes both an IBC-AMVP mode and an IBC-Merge mode.

IBC-AMVP mode: A prediction BV is obtained through a constructed merge candidate (merge candidate) list. A reference block of a current block and a corresponding final BV are obtained via processes such as hash search or full search. The final BV is encoded based on the prediction BV, thereby improving encoding efficiency.

IBC-Merge mode: Prediction is performed using a constructed merge candidate list. Through encoding processes such as SATD and rate distortion optimization (rate distortion optimization, RDO), the best merge candidate in the list is selected. A BV of the merge candidate is inherited to obtain a reference block and complete the prediction. In the IBC-Merge mode, an index of the merge candidate in the list, rather than the BV itself, is encoded, which may improve encoding efficiency.

The merge candidate list may be composed of encoding information such as encoded blocks at neighboring and non-neighboring locations, historically encoded blocks, temporally encoded blocks, and an average of candidate BVs. After the merge candidate list is constructed, candidates in the list may be re-ordered based on template differences of the candidates in the list. The template differences may be obtained from difference values (for example, SAD values) between reference block templates of the candidates and a current block template.

The merge candidate may include information such as an LIC flag. If an LIC flag of a candidate is true, when this candidate is selected for the current block, prediction is performed using the IBC-LIC technique (for details about the LIC technique, reference is made to below).

On the basis of the IBC-Merge mode, an IBC-MBVD mode is further introduced in a related technology. In the IBC-MBVD mode, after the BV is obtained based on the merge candidate, a BV difference (block vector difference, BVD) is determined based on a preset offset (offset) and direction, thereby correcting the original BV. For example, the original BV is BV0 = (x0, y0). For BV0, a BVD with an upward direction and an offset of k may be applied. A new BV0' obtained after applying the BVD may be expressed as: BV0' = (x0 + k, y).

**LIC technique**

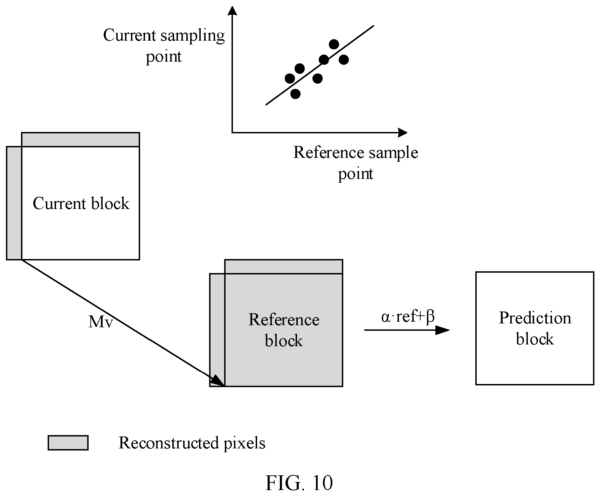

Referring to FIG. 10, the LIC technique is a block-level linear transformation technique. The LIC technique assumes that a linear relationship exists between a current block and a reference block, which may be expressed as follows:

$$\text{Pred} = \alpha \cdot \text{ref} + \beta$$

In which, $\alpha$ and $\beta$ may be derived from pixels in a reconstructed region neighboring to the current block and pixels in a reconstructed region neighboring to the reference block by using methods such as least squares.

In addition, a threshold threshold may be set. Different linear parameters may be selected based on magnitude of reference block pixels relative to the threshold.

$$\begin{cases} \text{Pred} = \alpha_1 \cdot \text{ref} + \beta_1, & \text{ref} <= \text{threshold} \\ \text{Pred} = \alpha_2 \cdot \text{ref} + \beta_2, & \text{else} \end{cases}$$

**Non-neighboring candidates in Inter-Merge**

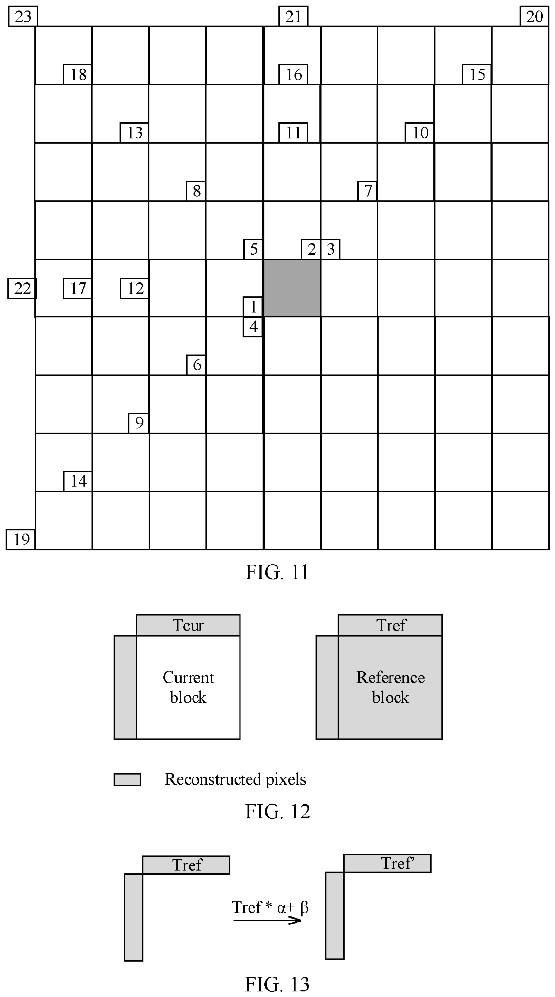

For an inter-coding block in the Merge mode, non-neighboring candidates may be added when constructing a merge list (Merge List). For example, non-neighboring points may be selected based on a size of a current block, and merge candidates may be attempted to be constructed. Locations of the non-adjacent points and the current block are as shown in FIG. 11. In FIG. 11, candidates labeled 1 to 5 are referred to as neighboring candidates, while candidates at all other locations are referred to as non-neighboring candidates.

**Multi-mode IBC-LIC technique**

In the multi-mode IBC-LIC technique, an IBC-LIC method is divided into a plurality of sub-methods based on a template region used for deriving linear parameters and a quantity of linear transform models. In an example, the IBC-LIC is divided into the following four sub-methods:

1. using an L-shaped template region with a single model;
2. using a left-side template region with a single model;
3. using a right-side template region with a single model; and
4. using an L-shaped template region with two models (selecting different models based on a threshold for linear transformation).

A specific IBC-LIC sub-method may be selected through encoding of indexes.

**List-based IBC transform prediction technique**

The list-based IBC transform prediction technique constructs a candidate list of available transform models for a current block based on transform models of encoded blocks at neighboring and non-neighboring locations, a historical transform model, a temporal transform model, a default transform model, or the like. A specific transform model in the list is then selected based on an index written into a bitstream. The transform model may be used to transform a reference block of the current block to acquire a prediction block.

For a coding block encoded using Inter, IBC, or IntraTMP, a reference block may be transformed to obtain a prediction block. The reference block may be transformed using one of the following methods:

LIC transformation: A relationship between a prediction block pixel Pred(x, y) and a reference block pixel ref(x, y) is as follows:

$$\mathrm{Pred}(x, y) = \alpha \cdot \mathrm{ref}(x, y) + \beta$$

Multi-model LIC transformation: A relationship between a prediction block pixel Pred(x, y) and a reference block pixel ref(x, y) is as follows:

$$\begin{cases} \mathrm{Pred}(x, y) = \alpha_1 \cdot \mathrm{ref}(x, y) + \beta_1, & \mathrm{ref}(x, y) <= \mathrm{threshold} \\ \mathrm{Pred}(x, y) = \alpha_2 \cdot \mathrm{ref}(x, y) + \beta_2, & \mathrm{else} \end{cases}$$

In which, threshold is a reference pixel threshold, and linear transformation is performed, using different parameters, on reference block pixels exceeding the threshold and reference block pixels not exceeding the threshold.

Filtering transformation: A relationship between a prediction block pixel Pred(x, y) and a reference block pixel is as follows:

$$\mathrm{Pred}(x, y) = c0C + c1N + c2S + c3E + c4W + c5B$$

In which, C denotes a reference block pixel at a location (x, y), N denotes a pixel above C, S denotes a pixel below C, W denotes a pixel to the left of C, and E denotes a pixel to the right of C. B(Bias) is a fixed value. For example, B denotes a median value within a pixel range. c0 to c5 are filter coefficients.

Accordingly, based on the above various transformation types, parameter information (for example, $\alpha_i$, $\beta_i$, $c_i$, threshold, and the like ) required for transformation may be stored as a transform model corresponding to the location of the coding block. These transform models may be used to construct a candidate list of transform models for subsequent IBC coding blocks.

Before a transform model in the list is applied, an offset value (offset) may be calculated based on pixel values within a template region of a current block and a template region of a reference block, and a predicted value may be adjusted accordingly based on the offset. For example:

Assuming that a template contains N pixels, a template predicted value Pred for each pixel may be calculated based on a reference block template, thereby calculating a total difference total Diff between the template predicted value and a current block template pixel Rec and an offset, as follows:

$$totalDiff = \sum(Rec - Pred);$$

$$offset = totalDiff/N.$$

A final predicted value may be obtained by adding the offset to a transformed predicted value. For example, in the case of LIC transform, a final predicted value may be calculated according to the following formula:

$$Pred(x, y) = \alpha \cdot ref(x, y) + \beta + offset$$

Whether transform models are considered the same may be determined according to the following method:

    a. if transform types are different, transform models are considered different;
    b. if the transform type is LIC transform and $\alpha$ coefficients differ, transform models are considered different;
    c. if the transform type is multi-model LIC transform and any $\alpha_i$ differs, transform models are considered different;
    d. if the transform type is filtering transform and any $c_i$ differs, transform models are considered different; and
    e. if thresholds of a plurality of models differ, transform models are considered different.

For example, a coding block at a location neighboring to a current block is encoded using the IBC-LIC method, and model parameters $\alpha_1$ and $\beta_1$ are derived by using a template region. The transform model $(a_0, \beta_0)$ is then stored. When a current block is encoded, this transform model is added as a candidate to a candidate list of available transform models. Then, the transform model is selected based on an index of the transform model, and a prediction block may be obtained through the following steps.

In step 1, based on a current block, a reference block template, and the selected transform model $(a_0, \beta_0)$, an offset of the model is calculated.

In step 2, a parameter is adjusted based on the offset: $\beta_1 = \beta_1 + offset$.

In step 3, a prediction block is calculated: Pred $= \alpha_1 \bullet ref + \beta_1$.

A block-level flag cu_ibc_model_merge_flag may be set for the above method. Cu_ibc_model_merge_flag may be used to indicate whether this method is used, and index cu_ibc_model_merge_idx may be used to indicate an index of the selected transform model in the list. In an example, in the method, the above syntax element is explicitly transmitted in both the IBC-AMVP mode and the IBC-Merge mode. In addition, when a coding block in the IBC-Merge mode inherits encoding information of a previously encoded IBC-Model-Merge block, only type information of the transform model is inherited, and a new transform model is re-derived based on the template for prediction.

**Adaptive IBC-MBVD list construction technique**

This technique proposes an IBC-MBVD list construction technique with adaptive offset values. An MBVD list including K candidates may be obtained through the following steps.

In step 1, a maximum offset value is set to N pixels, for example, N is 256. A quantity of possible directions is set to D, for example, D is 4 (up, down, left, and right). An initial search interval is set to M pixels, for example, M is 8. A size of an MBVD list is set to K, for example, K is 8.

In step 2, along each direction, a template difference of a reference block at each offset value with an interval of M is determined, where the offset value does not exceed N. K candidates with the smallest template differences are stored in the MBVD list. A candidate is a combination of an offset value and a direction, based on which a specific reference block location may be determined.

In step 3, for each candidate in the list, a template difference at a new location along the direction with an offset of $\pm M/2$ from a location of the candidate is determined. K candidates with the smallest template differences are stored in the MBVD list.

In step 4, step 3 is repeated, and M is divided by 2 each time until M equals 1 pixel.

**History-based MV prediction technique for IBC**

This technique maintains a historical BV list with a maximum length of N, for recording BVs of encoded IBC blocks. When a coding block is encoded using the IBC mode, the historical BV list may be updated. If a current BV already exists in the historical BV list, the BV in the list is moved to the end of the list; otherwise, it is first determined whether the historical BV list is full, and if yes, the earliest BV in the list is removed. Subsequently, the BV is added to the end of the historical BV list. The historical block vector list may be used for constructing a Merge list in IBC.

Currently, IBC has been widely applied in various video encoding and decoding standards. How to improve prediction performance of IBC so as to further improve encoding efficiency is a problem required to be addressed.

In view of this, an embodiment of this application provides an encoding method. The encoding method includes: performing intra template matching prediction on a current block to determine a prediction block and motion information of the current block; determining a residual block of the current block based on the prediction block of the current block; and storing the motion information of the current block into a motion information buffer corresponding to the current block, where the motion information in the motion information buffer is used for constructing a merge candidate set for a target block, and prediction of the target block is based on intra block copy.

In addition, an embodiment of this application further provides a decoding method. The decoding method includes: performing intra template matching prediction on a current block to determine a prediction block and motion information of the current block; determining a reconstructed block of the current block based on the prediction block of the current block and a residual block of the current block; and storing the motion information of the current block into a motion information buffer corresponding to the current block, where the motion information in the motion information buffer is used for constructing a merge candidate set for a target block, and prediction of the target block is based on intra block copy.

It may be learned based on the foregoing content that, in embodiments of this application, a merge set (merge list) for IBC blocks is constructed based on motion information of an IntraTMP block, thereby enriching information sources for the merge set for the IBC blocks, and improving encoding performance for the IBC blocks.

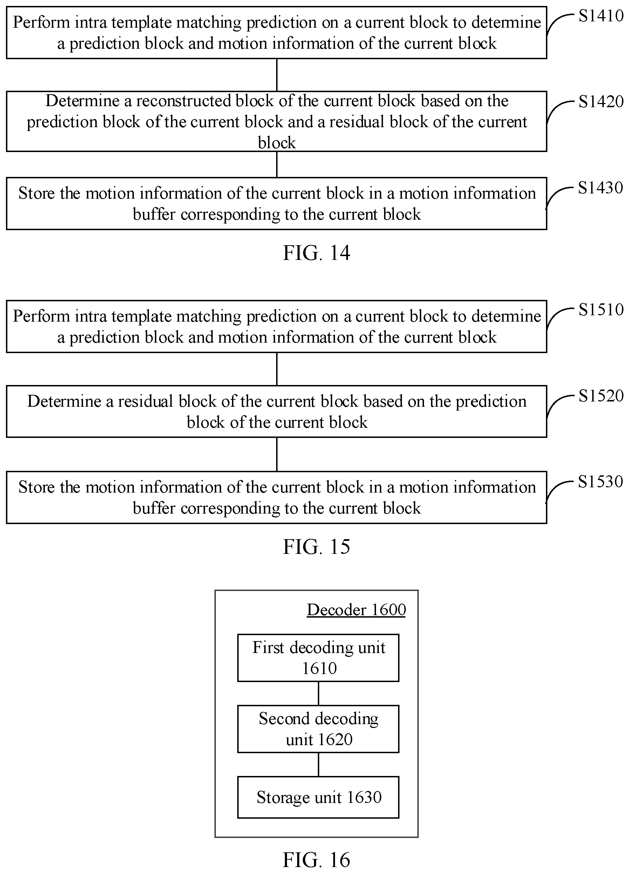

FIG. 14 is a schematic flowchart of a decoding method according to an embodiment of this application. The method in FIG. 14 may be applied to a decoder.

Referring to FIG. 14, in step S1410, intra template matching prediction is performed on a current block to determine a prediction block and motion information of the current block.

In some implementations, the current block refers to a current block to be decoded or a block currently being decoded. Since intra template matching prediction is used for the current block, the current block may sometimes also be referred to as an IntraTMP decoding block or IntraTMP block.

In some implementations, the current block refers to a current block to be predicted or a block currently being predicted.

A prediction mode of the current block is intra template matching prediction. Accordingly, a prediction process of the current block may include: determining a template of the current block; searching, based on the template of the current block, a reconstructed region for a target template that matches the template of the current block (for example, a template difference between the templates may be determined, and a template with the smallest template difference may be used as the target template); determining that a reconstructed block corresponding to the target template is a reference block of the current block; and determining a prediction block of the current block based on the reference block.

In some implementations, the reference block may be directly determined as the prediction block.

In some implementations, the reference block may be filtered, and the filtered reference block may be determined as the prediction block.

In some implementations, the motion information of the current block may include one or more of the following: one or more BVs (indicating a positional relationship between the current block and the reference block) corresponding to the current block; and a quantity of reference blocks of the current block.

In step S1420, a reconstructed block of the current block is determined based on the prediction block of the current block and a residual block of the current block.

In some implementations, a sum of the prediction block and the residual block may be determined as the reconstructed block of the current block.

The residual block of the current block may be obtained by parsing a bitstream. For example, the bitstream may be parsed to obtain a quantized residual block, and the quantized residual block may be inverse-quantized to determine the residual block of the current block.

In step S1430, the motion information of the current block is stored in a motion information buffer corresponding to the current block. The motion information in the motion information buffer is used for constructing a merge candidate set for a target block.

The target block is a picture block or decoding block to be predicted based on intra block copy, that is, an IBC block. The target block comes after the current block in decoding order, that is, the target block is a block to be decoded subsequent to the current block. It should be understood that "current" is a relative concept. When decoding the target block, the target block becomes the current block. However, for ease of description, the current block mentioned in embodiments of this application primarily refers to the IntraTMP decoding block mentioned in step S1410.

In embodiments of this application, decoding information (motion information) of the IntraTMP decoding block is fully utilized, thereby enriching information sources of the IBC merge candidate set and in turn improving prediction performance for IBC blocks. In addition, in embodiments of this application, the two decoding tools are combined via the motion information buffer, which basically does not increase decoding complexity.

The motion information buffer corresponding to the current block may be used to store motion information of picture blocks (for example, spatially neighboring blocks or spatially non-neighboring blocks of the target block) related to a spatial location of the target block.

In some implementations, the current block is related to the spatial location of the target block. For example, the current block is a block spatially neighboring or spatially non-neighboring to the target block.

In some implementations, the motion information of the current block may include first identification information. The first identification information may be used to indicate whether a filtering-based prediction mode is used for the current block. In other words, the first identification information may be stored as motion information, such that an IBC block to be subsequently decoded can inherit the first identification information, which helps improve decoding performance for the IBC blocks.

In some implementations, the first identification information may be a flag. If a value of the flag is 1 or true, it indicates that the filtering-based prediction mode is used for the current block. If the value of the flag is 0 or false, it indicates that the filtering-based prediction mode is not used for the current block.

In some implementations, the first identification information may be referred to as an IBC filtering flag.

In some implementations, if the filtering-based prediction mode is used for the current block, and prediction of the target block is based on the motion information of the current block, the filtering-based prediction mode is used for the target block.

For example, when decoding an IBC block (corresponding to the target block described above), a Merge list may be first constructed for the IBC block. During construction of the Merge list, motion information may be obtained from locations spatially neighboring and/or non-neighboring to the IBC block. When a block at a corresponding location is predicted using the IBC mode or the IntraTMP mode (the block predicted using the IntraTMP mode corresponds to the current block described above), motion information at the corresponding location may be used as an available Merge candidate, and added to the Merge list of the IBC block. For a specific Merge candidate, if an IBC filtering flag in motion information of the candidate is true, the IBC block may be predicted using the filtering mode. For example, a reference block template of the IBC block may be filtered to calculate a template difference. For another example, a reference block of the IBC block may be filtered and used as a final prediction block.

In some implementations, if the filtering-based prediction mode is used for the current block, and prediction of the target block is based on the motion information of the current block, whether to use the filtering-based prediction mode for the target block is determined based on a template difference between the target block and the current block.

For example, when decoding an IBC block (corresponding to the target block described above), a Merge list may be first constructed for the IBC block. During construction of the Merge list, motion information may be obtained from locations spatially neighboring and/or non-neighboring to the IBC block. When a block at a corresponding location is predicted using the IBC mode or the IntraTMP mode (the block predicted using the IntraTMP mode corresponds to the current block described above), motion information at the corresponding location may be used as an available Merge candidate, and added to the Merge list of the IBC block. For a specific Merge candidate, if an IBC filtering flag in motion information of the candidate is true, for an IBC block, a template difference between a template of the IBC block and a template of a block corresponding to the specific Merge candidate may be determined. If the template difference is greater than or equal to a preset threshold, the filtering-based prediction mode may be used for the IBC block. Otherwise, the filtering-based prediction mode may not be used for the IBC block.

In some implementations, if the filtering-based prediction mode is used for the current block, a prediction mode based on a transform model (for example, an LIC model) is used for the target block. For example, the target block may inherit the first identification information of the current block. The first identification information indicates that the filtering-based prediction mode is used for the current block. After the first identification information is inherited, the filtering-based prediction mode is not used for the target block, but the prediction mode based on the transform model is used for the target block. Alternatively, after the first identification information is inherited, a selection may be made, for the target block, between the filtering-based prediction mode and the prediction mode based on the transform model. The above implementation may further improve flexibility of IBC block decoding.

In some implementations, a bitstream may be parsed to determine second identification information. The second identification information is used to indicate whether the motion information of the current block includes the first identification information. In other words, one piece of identification information may be introduced, to indicate whether an IBC block is allowed to inherit a filtering operation of an IntraTMP block, such that a function provided in embodiments of this application may be flexibly enabled or disabled according to actual situations.

In some implementations, the second identification information may correspond to a first picture frame (a frame in which the current block is located) or a first picture frame sequence (a frame sequence in which the current block is located). In other words, frame-level or sequence-level identification information may be introduced to control enabling or disabling of a function provided in embodiments of this application, thereby reducing encoding overheads.

In some implementations, if a size of the current block satisfies a preset condition, the motion information of the current block includes the first identification information. For example, if a width of the current block is greater than or equal to a first threshold and/or a height of the current block is greater than or equal to a second threshold, the first identification information is included in the motion information of the current block; otherwise, the first identification information is not included in the motion information of the current block.

In some implementations, intra template matching prediction is performed on the current block based on a plurality of reference blocks. For example, fusion prediction is performed on the current block based on the plurality of reference blocks. In this case, the motion information of the current block may include third identification information. The third identification information is used to indicate that a prediction direction of the current block is bidirectional. In other words, if intra template matching prediction is performed on the current block based on the plurality of reference blocks, the current block may be considered as an IBC block to which a bidirectional intra block copy mode is applied, and bidirectional prediction information is stored as motion information, thereby providing richer motion information for subsequent IBC blocks.

In some implementations, if prediction of the target block is based on the motion information of the current block, the bidirectional intra block copy mode is used for predicting the target block. In other words, if the target block is predicted based on the motion information of the current block, the target block inherits the third identification information mentioned above.

In some implementations, if intra template matching prediction is performed on the current block based on the plurality of reference blocks, a first block vector and a second block vector may be determined, for the current block, from block vectors corresponding to the plurality of reference blocks. The first block vector may be used as a forward block vector corresponding to the current block, and the second block vector may be used as a backward block vector corresponding to the current block. The first block vector and the second block vector may be used for performing bidirectional intra block copy mode prediction on subsequent IBC blocks.

The first block vector and the second block vector may be any two block vectors among the block vectors corresponding to the plurality of reference blocks. In some implementations, the first block vector is a block vector corresponding to a first reference block among the plurality of reference blocks, the second block vector is a block vector corresponding to a second reference block among the plurality of reference blocks, and the first reference block and the second reference block are two reference blocks, among the plurality of reference blocks, that have the smallest template differences relative to the current block. The two block vectors corresponding to the smallest template differences are included in the motion information, which may improve prediction performance for subsequent IBC blocks.

In some implementations, if intra template matching prediction is performed on the current block based on the plurality of reference blocks, the motion information of the current block is not stored in the motion information buffer.

In some implementations, a bitstream may be parsed to determine fourth identification information. The fourth identification information is used to indicate whether the motion information of the current block includes the third identification information. In other words, one piece of identification information may be introduced, to indicate whether a function provided in embodiments of this application is enabled (that is, for an IntraTMP block predicted based on a plurality of reference blocks, whether to store identification information for the bidirectional intra block copy mode in corresponding motion information), which may allow the function provided in embodiments of this application to be flexibly enabled or disabled according to actual situations.

In some implementations, the fourth identification information may correspond to a first picture frame (a frame in which the current block is located) or a first picture frame sequence (a frame sequence in which the current block is located). In other words, frame-level or sequence-level identification information may be introduced to control enabling or disabling of a function provided in embodiments of this application, thereby reducing encoding overheads.

In some implementations, if a size of the current block satisfies a preset condition, the motion information of the current block includes the third identification information. For example, if a width of the current block is greater than or equal to a first threshold and/or a height of the current block is greater than or equal to a second threshold, the third identification information is included in the motion information of the current block; otherwise, the third identification information is not included in the motion information of the current block.

In some implementations, intra template matching prediction is performed on the current block based on a plurality of reference blocks, the motion information of the current block includes a third block vector, and a value of the third block vector is determined based on values of block vectors corresponding to the plurality of reference blocks. For example, the value of the third block vector is an average value of the values of the block vectors corresponding to the plurality of reference blocks. For another example, the value of the third block vector is a weighted sum of the values of the block vectors corresponding to the plurality of reference blocks. The values of the plurality of block vectors are considered in the third block vector, and the third block vector is stored as motion information, which may improve prediction performance for subsequent IBC blocks.

In some implementations, intra template matching prediction is performed on the current block based on a plurality of reference blocks, the motion information of the current block includes a block vector corresponding to a third reference block, and the third reference block is determined from the plurality of reference blocks based on errors between a reconstructed block of the current block and the plurality of reference blocks. For example, the third reference block is a reference block, among the plurality of reference blocks, that has the smallest error relative to the reconstructed block, or a reference block whose error value is less than a specific threshold. The errors between the reference blocks and the reconstructed block are considered, such that the block vector included in the motion information is a block vector with better prediction performance, which helps improve prediction performance for IBC blocks.

The decoding method provided in embodiments of this application is described in detail above with reference to FIG. 14. An encoding method provided in embodiments of this application is described in detail below with reference to FIG. 15.

FIG. 15 is a schematic flowchart of an encoding method according to an embodiment of this application. The method in FIG. 14 may be applied to an encoder.

Referring to FIG. 15, in step S1510, intra template matching prediction is performed on a current block to determine a prediction block and motion information of the current block.

In some implementations, the current block refers to a current block to be encoded or a current coding block. Since intra template matching prediction is used for the current block, the current block may sometimes be referred to as an IntraTMP coding block or IntraTMP block.

In some implementations, the current block refers to a current block to be predicted or a block currently being predicted.

A prediction mode of the current block is intra template matching prediction. Accordingly, a prediction process of the current block may include: determining a template of the current block; searching, based on the template of the current block, a reconstructed region for a target template that matches the template of the current block (for example, a template difference between the templates may be determined, and a template with the smallest template difference may be used as the target template); determining that a reconstructed block corresponding to the target template is a reference block of the current block; and determining a prediction block of the current block based on the reference block.

In some implementations, the reference block may be directly determined as the prediction block.

In some implementations, the reference block may be filtered, and the filtered reference block may be determined as the prediction block.

In some implementations, the motion information of the current block may include one or more of the following: one or more BVs (indicating a positional relationship between the current block and the reference block) corresponding to the current block; and a quantity of reference blocks of the current block.

In step S1520, a residual block of the current block is determined based on the prediction block of the current block.

In some implementations, a difference between the prediction block and an original block may be determined as the residual block of the current block.

In some implementations, the residual block of the current block may be quantized to determine the quantized residual block. The quantized residual block may be encoded, and encoded bits are written into a bitstream.

In step S1530, the motion information of the current block is stored in a motion information buffer corresponding to the current block. The motion information in the motion information buffer is used for constructing a merge candidate set for a target block.

The target block is a picture block or coding block to be predicted based on intra block copy, that is, an IBC block. The target block comes after the current block in encoding order, that is, the target block is a coding block subsequent to the current block. It should be understood that "current" is a relative concept. When encoding the target block, the target block becomes the current block. For ease of description, the current block mentioned in embodiments of this application primarily refers to the IntraTMP coding block mentioned in step S1510.

In embodiments of this application, encoding information (motion information) of the IntraTMP coding block is fully utilized, thereby enriching information sources of the IBC merge candidate set and in turn improving prediction performance for IBC blocks. In addition, in embodiments of this application, the two encoding tools are combined via the motion information buffer, which basically does not increase encoding complexity.

The motion information buffer corresponding to the current block may be used to store motion information of picture blocks (for example, spatially neighboring blocks or spatially non-neighboring blocks of the target block) related to a spatial location of the target block.

In some implementations, the current block is related to the spatial location of the target block. For example, the current block is a block spatially neighboring or spatially non-neighboring to the target block.

In some implementations, the motion information of the current block may include first identification information.

The first identification information may be used to indicate whether a filtering-based prediction mode is used for the current block. In other words, the first identification information may be stored as motion information, such that an IBC block to be subsequently encoded can inherit the first identification information, which helps improve encoding performance for the IBC blocks.

In some implementations, the first identification information may be a flag. If a value of the flag is 1 or true, it indicates that the filtering-based prediction mode is used for the current block. If the value of the flag is 0 or false, it indicates that the filtering-based prediction mode is not used for the current block.

In some implementations, the first identification information may be referred to as an IBC filtering flag.

In some implementations, if the filtering-based prediction mode is used for the current block, and prediction of the target block is based on the motion information of the current block, the filtering-based prediction mode is used for the target block.

For example, when encoding an IBC block (corresponding to the target block described above), a Merge list may be first constructed for the IBC block. During construction of the Merge list, motion information may be obtained from locations spatially neighboring and/or non-neighboring to the IBC block. When a block at a corresponding location is predicted using the IBC mode or the IntraTMP mode (the block predicted using the IntraTMP mode corresponds to the current block described above), motion information at the corresponding location may be used as an available Merge candidate, and added to the Merge list of the IBC block. For a specific Merge candidate, if an IBC filtering flag in motion information of the candidate is true, the IBC block may be predicted using the filtering mode. For example, a reference block template of the IBC block may be filtered to calculate a template difference. For another example, a reference block of the IBC block may be filtered and used as a final prediction block.

In some implementations, if the filtering-based prediction mode is used for the current block, and prediction of the target block is based on the motion information of the current block, whether to use the filtering-based prediction mode for the target block is determined based on a template difference between the target block and the current block.

For example, when encoding an IBC block (corresponding to the target block described above), a Merge list may be first constructed for the IBC block. During construction of the Merge list, motion information may be obtained from locations spatially neighboring and/or non-neighboring to the IBC block. When a block at a corresponding location is predicted using the IBC mode or the IntraTMP mode (the block predicted using the IntraTMP mode corresponds to the current block described above), motion information at the corresponding location may be used as an available Merge candidate, and added to the Merge list of the IBC block. For a specific Merge candidate, if an IBC filtering flag in motion information of the candidate is true, for an IBC block, a template difference between a template of the IBC block and a template of a block corresponding to the specific Merge candidate may be determined. If the template difference is greater than or equal to a preset threshold, the filtering-based prediction mode may be used for the IBC block. Otherwise, the filtering-based prediction mode may not be used for the IBC block.

In some implementations, if the filtering-based prediction mode is used for the current block, a prediction mode based on a transform model (for example, an LIC model) is used for the target block. For example, the target block may inherit the first identification information of the current block. The first identification information indicates that the filtering-based prediction mode is used for the current block. After the first identification information is inherited, the filtering-based prediction mode is not used for the target block, but the prediction mode based on the transform model is used for the target block. Alternatively, after the first identification information is inherited, a selection may be made, for the target block, between the filtering-based prediction mode and the prediction mode based on the transform model. The above implementation may further improve flexibility of IBC block encoding.

In some implementations, the second identification information may be encoded, and encoded bits may be written into a bitstream. The second identification information is used to indicate whether the motion information of the current block includes the first identification information. In other words, one piece of identification information may be introduced, to indicate whether an IBC block is allowed to inherit a filtering operation of an IntraTMP block, such that a function provided in embodiments of this application may be flexibly enabled or disabled according to actual situations.

In some implementations, the second identification information may correspond to a first picture frame (a frame in which the current block is located) or a first picture frame sequence (a frame sequence in which the current block is located). In other words, frame-level or sequence-level identification information may be introduced to control enabling or disabling of a function provided in embodiments of this application, thereby reducing encoding overheads.

In some implementations, if a size of the current block satisfies a preset condition, the motion information of the current block includes the first identification information. For example, if a width of the current block is greater than or equal to a first threshold and/or a height of the current block is greater than or equal to a second threshold, the first identification information is included in the motion information of the current block; otherwise, the first identification information is not included in the motion information of the current block.

In some implementations, intra template matching prediction is performed on the current block based on a plurality of reference blocks. For example, fusion prediction is performed on the current block based on the plurality of reference blocks. In this case, the motion information of the current block may include third identification information. The third identification information is used to indicate that a prediction direction of the current block is bidirectional. In other words, if intra template matching prediction is performed on the current block based on the plurality of reference blocks, the current block may be considered as an IBC block to which a bidirectional intra block copy mode is applied, and bidirectional prediction information is stored as motion information, thereby providing richer motion information for subsequent IBC blocks.

In some implementations, if prediction of the target block is based on the motion information of the current block, the bidirectional intra block copy mode is used for predicting the target block. In other words, if the target block is predicted based on the motion information of the current block, the target block inherits the third identification information mentioned above.

In some implementations, if intra template matching prediction is performed on the current block based on the plurality of reference blocks, a first block vector and a second block vector may be determined, for the current block, from block vectors corresponding to the plurality of reference blocks. The first block vector may be used as a forward block vector corresponding to the current block, and the second block vector may be used as a backward block vector corresponding to the current block. The first block vector and the second block vector may be used for performing bidirectional intra block copy mode prediction on subsequent IBC blocks.

The first block vector and the second block vector may be any two block vectors among the block vectors corresponding to the plurality of reference blocks. In some implementations, the first block vector is a block vector corresponding to a first reference block among the plurality of reference blocks, the second block vector is a block vector corresponding to a second reference block among the plurality of reference blocks, and the first reference block and the second reference block are two reference blocks, among the plurality of reference blocks, that have the smallest template differences relative to the current block. The two block vectors corresponding to the smallest template differences are included in the motion information, which may improve prediction performance for subsequent IBC blocks.

In some implementations, if intra template matching prediction is performed on the current block based on the plurality of reference blocks, the motion information of the current block is not stored in the motion information buffer.

In some implementations, the fourth identification information may be encoded, and encoded bits may be written into a bitstream. The fourth identification information is used to indicate whether the motion information of the current block includes the third identification information. In other words, one piece of identification information may be introduced, to indicate whether a function provided in embodiments of this application is enabled (that is, for an IntraTMP block predicted based on a plurality of reference blocks, whether to store identification information for the bidirectional intra block copy mode in corresponding motion information), which may allow the function provided in embodiments of this application to be flexibly enabled or disabled according to actual situations.

In some implementations, the fourth identification information may correspond to a first picture frame (a frame in which the current block is located) or a first picture frame sequence (a frame sequence in which the current block is located). In other words, frame-level or sequence-level identification information may be introduced to control enabling or disabling of a function provided in embodiments of this application, thereby reducing encoding overheads.

In some implementations, if a size of the current block satisfies a preset condition, the motion information of the current block includes the third identification information. For example, if a width of the current block is greater than or equal to a first threshold and/or a height of the current block is greater than or equal to a second threshold, the third identification information is included in the motion information of the current block; otherwise, the third identification information is not included in the motion information of the current block.

In some implementations, intra template matching prediction is performed on the current block based on a plurality of reference blocks, the motion information of the current block includes a third block vector, and a value of the third block vector is determined based on values of block vectors corresponding to the plurality of reference blocks. For example, the value of the third block vector is an average value of the values of the block vectors corresponding to the plurality of reference blocks. For another example, the value of the third block vector is a weighted sum of the values of the block vectors corresponding to the plurality of reference blocks. The values of the plurality of block vectors are considered in the third block vector, and the third block vector is stored as motion information, which may improve prediction performance for subsequent IBC blocks.

In some implementations, intra template matching prediction is performed on the current block based on a plurality of reference blocks, the motion information of the current block includes a block vector corresponding to a third reference block, and the third reference block is determined from the plurality of reference blocks based on errors between a reconstructed block of the current block and the plurality of reference blocks. For example, the third reference block is a reference block, among the plurality of reference blocks, that has the smallest error relative to the reconstructed block, or a reference block whose error value is less than a specific threshold. The errors between the reference blocks and the reconstructed block are considered, such that the block vector included in the motion information is a block vector with better prediction performance, which helps improve prediction performance for IBC blocks.

The following describes embodiments of this application in more detail with reference to specific examples. It should be noted that the examples below are merely intended to assist those skilled in the art in understanding the embodiments of this application, but not intended to use specific values or specific scenarios in the examples to limit the embodiments of this application. Apparently, those skilled in the art may make various equivalent modifications or variations based on the examples illustrated, and such modifications or variations also fall within the scope of embodiments of this application.

Example 1:

Filtering may be performed on the prediction block in both IntraTMP and IBC to improve prediction performance. In IntraTMP, a block-level flag may be used to indicate whether the filtering is applied to the prediction block for the current block. In IBC-Merge, whether the filtering is applied to the prediction block for the current block is indicated by inheriting a flag from a selected Merge candidate. After an IntraTMP coding block has been encoded, a filtering flag of the IntraTMP coding block may be stored. Subsequently, when the motion information is selected for a subsequent IBC-Merge coding block, the filtering flag may be inherited to determine whether to use filtering-based prediction.

A decoding process is as follows.

In step 1, prediction of an IntraTMP block is completed, and motion information required to be stored is determined. For example, if the IntraTMP block is predicted using the filtering-based prediction method, the IBC filtering flag may be set to true and stored as part of motion information. In addition, the motion information may include a block vector, a quantity of reference blocks, and the like.

In step 2, the motion information of the IntraTMP obtained in step 1 is stored in the motion information buffer corresponding to the current block. When the location of the current block serves as a reference for a subsequent coding block, the motion information may be used.

In step 3, a Merge list is constructed for an IBC block, where motion information may be obtained from spatially neighboring locations, spatially non-neighboring locations, or the like. When a block at a corresponding location is predicted using the IBC mode or the IntraTMP mode, motion information corresponding to the block may be used as one of available Merge candidates, and added to the IBC-Merge list.

In step 4, for a specific Merge candidate, if an IBC filtering flag in motion information of the candidate is true, it indicates that the filtering mode is used for a current IBC block. For example, filtering may be performed on a reference block template of the IBC block to calculate a template difference, for example, filtering may be performed on a reference block of the IBC block and the filtered reference block may be used as a final prediction block.

Example 2:

A plurality of reference blocks may be used in both IntraTMP and IBC to complete prediction. In IntraTMP, a block-level flag may be used to indicate whether fusion prediction is used for the current block. In IBC, whether a bidirectional IBC mode is used for the current block may be indicated by using a block-level flag or by inheriting a flag from a selected Merge candidate. When the fusion prediction is used for an IntraTMP block, its prediction direction may be stored as bidirectional, and two block vectors with the smallest template differences may be stored as a forward block vector and a backward block vector, respectively. When the motion information is selected for a subsequent IBC-Merge coding block, the motion information may be used as motion information for the bidirectional IBC mode.

A decoding process is as follows.

In step 1, prediction of an IntraTMP block is completed, and motion information required to be stored is determined. For example, when the IntraTMP block is predicted using the fusion prediction method, its prediction direction may be stored as bidirectional, and two block vectors with the smallest template differences may be stored as a forward block vector and a backward block vector, respectively.

In step 2, the motion information of the IntraTMP block obtained in step 1 is stored in the motion information buffer corresponding to the current block. When the location of the current block serves as a reference for a subsequent IBC block, the motion information may be used.

In step 3, an IBC-Merge list is constructed for an IBC block. Motion information may be obtained for the IBC block from spatially neighboring locations, spatially non-neighboring locations, or the like. When a block at a corresponding location is encoded using the IBC mode or the IntraTMP mode, motion information corresponding to the block may be used as one of available Merge candidates, and added to the IBC-Merge list. If the motion information of the IntraTMP block corresponds to bidirectional prediction, the forward block vector and the backward block vector may be respectively added to the Merge list as two different Merge candidates. For example, the forward block vector is first added to the Merge list as a Merge candidate 1. Then, the backward block vector is added to the Merge list as a Merge candidate 2.

In this method, encoding information of the IntraTMP coding block is used, which enriches encoding information used for constructing the Merge list in IBC, thereby improving encoding efficiency. The two existing encoding tools are combined, and no additional complexity is introduced.

The method embodiments of this application are described above in detail with reference to FIG. 1 to FIG. 15.

Apparatus embodiments of this application are described below in detail with reference to FIG. 16 to FIG. 19. It should be understood that the descriptions of the method embodiments correspond to descriptions of the apparatus embodiments, and therefore, for parts that are not described in detail, reference may be made to the foregoing method embodiments.

FIG. 16 is a schematic structural diagram of a decoder according to an embodiment of this application. As shown in FIG. 16, the decoder 1600 includes a first decoding unit 1610, a second decoding unit 1620, and a storage unit 1630.

The first decoding unit 1610 is configured to perform intra template matching prediction on a current block to determine a prediction block and motion information of the current block.

The second decoding unit 1620 is configured to determine a reconstructed block of the current block based on the prediction block of the current block and a residual block of the current block.

The storage unit 1630 is configured to store the motion information of the current block into a motion information buffer corresponding to the current block, where the motion information in the motion information buffer is used for constructing a merge candidate set for a target block, and prediction of the target block is based on intra block copy.

In some implementations, the motion information of the current block includes first identification information, and the first identification information is used to indicate whether a filtering-based prediction mode is used for the current block.

In some implementations, in a case that the filtering-based prediction mode is used for the current block, and prediction of the target block is based on the motion information of the current block, the filtering-based prediction mode is used for the target block; or in a case that the filtering-based prediction mode is used for the current block, and prediction of the target block is based on the motion information of the current block, whether to use the filtering-based prediction mode for the target block is determined based on a template difference between the target block and the current block.

In some implementations, in a case that the filtering-based prediction mode is used for the current block, a prediction mode based on a transform model is used for the target block.

In some implementations, the transform model is a local illumination compensation model.

In some implementations, the decoder 1600 further includes: a third decoding unit, configured to parse a bitstream to determine second identification information, where the second identification information is used to indicate whether the motion information of the current block includes the first identification information.

In some implementations, the current block belongs to a first picture frame or a first picture frame sequence, and the second identification information corresponds to the first picture frame or the first picture frame sequence.

In some implementations, if a size of the current block satisfies a preset condition, the motion information of the current block includes the first identification information.

In some implementations, the preset condition includes: a width of the current block being greater than or equal to a first threshold; and/or a height of the current block being greater than or equal to a second threshold.

In some implementations, intra template matching prediction is performed on the current block based on a plurality of reference blocks, the motion information of the current block includes third identification information, and the third identification information is used to indicate that a prediction direction of the current block is bidirectional.

In some implementations, in a case that prediction of the target block is based on the motion information of the current block, a bidirectional intra block copy mode is used for predicting the target block.

In some implementations, the motion information of the current block includes a first block vector and a second block vector, the first block vector is a forward block vector corresponding to the current block, the second block vector is a backward block vector corresponding to the current block, and the first block vector and the second block vector are determined based on block vectors corresponding to the plurality of reference blocks.

In some implementations, the first block vector is a block vector corresponding to a first reference block among the plurality of reference blocks, the second block vector is a block vector corresponding to a second reference block among the plurality of reference blocks, and the first reference block and the second reference block are two reference blocks, among the plurality of reference blocks, that have the smallest template differences relative to the current block.

In some implementations, the decoder 1600 further includes: a fourth decoding unit, configured to parse a bitstream to determine fourth identification information, where the fourth identification information is used to indicate whether the motion information of the current block includes the third identification information.

In some implementations, the current block belongs to a first picture frame or a first picture frame sequence, and the fourth identification information corresponds to the first picture frame or the first picture frame sequence.

In some implementations, if a size of the current block satisfies a preset condition, the motion information of the current block includes the third identification information.

In some implementations, the preset condition includes: a width of the current block being greater than or equal to a first threshold; and/or a height of the current block being greater than or equal to a second threshold.

In some implementations, intra template matching prediction is performed on the current block based on a plurality of reference blocks, the motion information of the current block includes a third block vector, and a value of the third block vector is determined based on values of block vectors corresponding to the plurality of reference blocks.

In some implementations, the value of the third block vector is an average value of the values of the block vectors corresponding to the plurality of reference blocks.

In some implementations, intra template matching prediction is performed on the current block based on a plurality of reference blocks, the motion information of the current block includes a block vector corresponding to a third reference block, and the third reference block is determined from the plurality of reference blocks based on errors between the reconstructed block of the current block and the plurality of reference blocks.

In some implementations, the third reference block is a reference block, among the plurality of reference blocks, that has the smallest error relative to the reconstructed block.

In some implementations, the motion information buffer is used to cache motion information of picture blocks that are related to a spatial location of the target block.

It may be understood that in embodiments of this application, the term "unit" may be a partial circuit, a partial processor, a partial program or software, or the like. Certainly, the term "unit" may be a module or may be in a non-modular form. In addition, component parts in the embodiments may be integrated into one processing unit, or each of the units may exist alone physically, or two or more units may be integrated into one unit. The integrated unit may be implemented in a form of hardware, or may be implemented in a form of a software functional module.

When the integrated unit is implemented in a form of a software functional module and not sold or used as an independent product, the integrated unit may be stored in a computer-readable storage medium. Based on such an understanding, the technical solutions of embodiments essentially, or the part contributing to the conventional technology, or all or a part of the technical solutions may be implemented in a form of a software product. The computer software product is stored in a storage medium and includes several instructions for instructing a computer device (which may be a personal computer, a server, or a network device) or a processor (processor) to execute all or a part of the steps of the methods described in the embodiments. The foregoing storage medium includes various media that may store a program code, such as an USB flash drive, a removable hard disk, a read-only memory (Read-only Memory, ROM), a random access memory (Random Access Memory, RAM), a magnetic disk, or an optical disk.

Therefore, an embodiment of this application provides a computer-readable storage medium, applied to a decoder 1600. The computer-readable storage medium stores a computer program, and the computer program, when executed by a processor, causes the decoding method according to the foregoing first embodiment to be implemented.

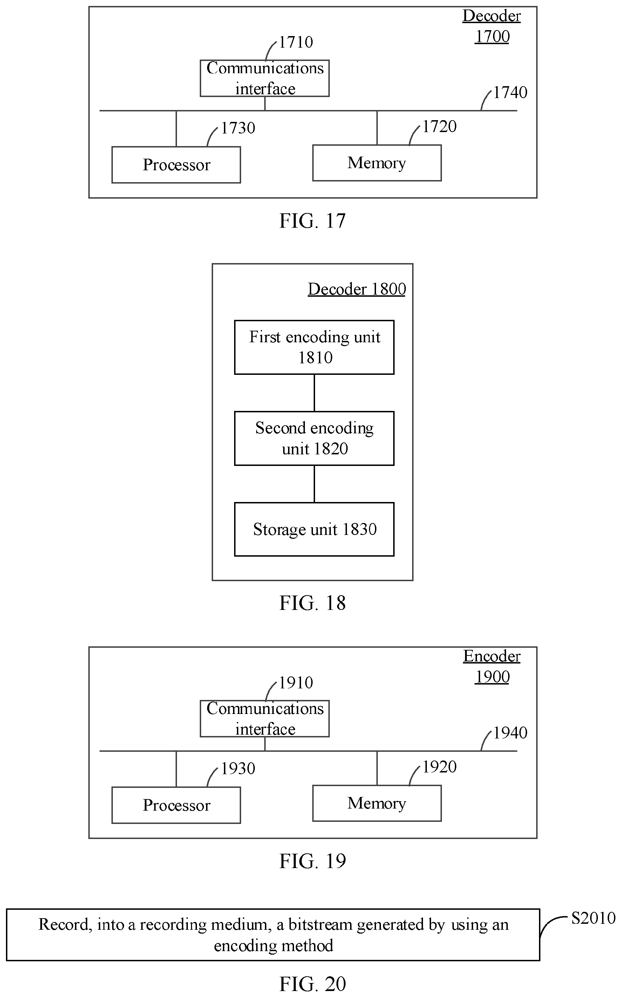

Based on the composition of the decoder 1600 and the computer-readable storage medium, referring to FIG. 17, FIG. 17 is a schematic diagram of a specific hardware structure of the decoder 1600 according to an embodiment of this application. As shown in FIG. 17, the decoder 1700 may include a communications interface 1710, a memory 1720, and a processor 1730. The components are coupled together through a bus system 1740. It may be understood that the bus system 1740 is configured to implement connection and communication between these components. The bus system 1740 may further include a power bus, a control bus, a status signal bus, and the like in addition to a data bus. However, for clarity of description, various buses are marked as the bus system 1740 in FIG. 17.

The communications interface 1710 is configured to receive and transmit signals in a process of transmitting and receiving information with other external network elements.

The memory 1720 is configured to store a computer program.

The processor 1730 is configured to run the computer program to execute the following operations:

performing intra template matching prediction on a current block to determine a prediction block and motion information of the current block;
determining a reconstructed block of the current block based on the prediction block of the current block and a residual block of the current block; and
storing the motion information of the current block into a motion information buffer corresponding to the current block, where the motion information in the motion information buffer is used for constructing a merge candidate set for a target block, and prediction of the target block is based on intra block copy.

It may be understood that the memory 1720 in the embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DRRAM). The memory 1720 in the systems and the methods described in this application includes but is not limited to these memories and any memory of another appropriate type.

However, the processor 1730 may be an integrated circuit chip having a signal processing capability. In an implementation process, steps in the foregoing methods can be implemented by using a hardware integrated logical circuit in the processor 1730, or by using instructions in a form of software. The processor 1730 may be a general-purpose processor, a digital signal processor (Digital Signal Processor, DSP), an application-specific integrated circuit (Application Specific Integrated Circuit, ASIC), a field-programmable gate array (Field Programmable Gate Array, FPGA) or another programmable logic device, a discrete gate or a transistor logic device, or a discrete hardware component. The processor may implement or execute the methods, steps, and logical block diagrams disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory 1720, and the processor 1730 reads information in the memory 1720 and completes the steps of the foregoing methods in combination with hardware of the processor.

It may be understood that these embodiments described in this application may be implemented by hardware, software, firmware, middleware, microcode, or a combination thereof. For hardware implementation, the processing unit may be implemented in one or more application-specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field programmable gate arrays (Field-Programmable Gate Array, FPGA), general-purpose processors, controllers, microcontrollers, microprocessors, and other electronic units configured to perform the functions described in this application, or a combination thereof. For software implementation, the techniques described in this application can be implemented by modules (e.g., processes, functions, etc.) that perform the functions described in this application. Software code may be stored in a memory and executed by a processor. The memory can be implemented in or outside the processor.

Optionally, in another embodiment, the processor 1730 is further configured to run the computer program to perform the decoding method according to the foregoing embodiments.

FIG. 18 is a schematic structural diagram of an encoder according to an embodiment of this application. As shown in FIG. 18, the encoder 1800 includes a first encoding unit 1810, a second encoding unit 1820, and a storage unit 1830.

The first encoding unit 1810 is configured to perform intra template matching prediction on a current block to determine a prediction block and motion information of the current block.

The second encoding unit 1820 is configured to determine a residual block of the current block based on the prediction block of the current block.

The storage unit 1830 is configured to store the motion information of the current block into a motion information buffer corresponding to the current block, where the motion information in the motion information buffer is used for constructing a merge candidate set for a target block, and prediction of the target block is based on intra block copy.

In some implementations, the motion information of the current block includes first identification information, and the first identification information is used to indicate whether a filtering-based prediction mode is used for the current block.

In some implementations, in a case that the filtering-based prediction mode is used for the current block, and prediction of the target block is based on the motion information of the current block, the filtering-based prediction mode is used for the target block; or in a case that the filtering-based prediction mode is used for the current block, and prediction of the target block is based on the motion information of the current block, whether to use the filtering-based prediction mode for the target block is determined based on a template difference between the target block and the current block.

In some implementations, in a case that the filtering-based prediction mode is used for the current block, a prediction mode based on a transform model is used for the target block.

In some implementations, the transform model is a local illumination compensation model.

In some implementations, the encoder 1800 further includes: a third encoding unit, configured to encode the second identification information, and write encoded bits into a bitstream, where the second identification information is used to indicate whether the motion information of the current block includes the first identification information.

In some implementations, the current block belongs to a first picture frame or a first picture frame sequence, and the second identification information corresponds to the first picture frame or the first picture frame sequence.

In some implementations, if a size of the current block satisfies a preset condition, the motion information of the current block includes the first identification information.

In some implementations, the preset condition includes: a width of the current block being greater than or equal to a first threshold; and/or a height of the current block being greater than or equal to a second threshold.

In some implementations, intra template matching prediction is performed on the current block based on a plurality of reference blocks, the motion information of the current block includes third identification information, and the third identification information is used to indicate that a prediction direction of the current block is bidirectional.

In some implementations, in a case that prediction of the target block is based on the motion information of the current block, a bidirectional intra block copy mode is used for predicting the target block.

In some implementations, the motion information of the current block includes a first block vector and a second block vector, the first block vector is a forward block vector corresponding to the current block, the second block vector is a backward block vector corresponding to the current block, and the first block vector and the second block vector are determined based on block vectors corresponding to the plurality of reference blocks.

In some implementations, the first block vector is a block vector corresponding to a first reference block among the plurality of reference blocks, the second block vector is a block vector corresponding to a second reference block among the plurality of reference blocks, and the first reference block and the second reference block are two reference blocks, among the plurality of reference blocks, that have the smallest template differences relative to the current block.

In some implementations, the encoder 1800 further includes: a fourth encoding unit, configured to encode fourth identification information, and write encoded bits into a bitstream, where the fourth identification information is used to indicate whether the motion information of the current block includes the third identification information.

In some implementations, the current block belongs to a first picture frame or a first picture frame sequence, and the fourth identification information corresponds to the first picture frame or the first picture frame sequence.

In some implementations, if a size of the current block satisfies a preset condition, the motion information of the current block includes the third identification information.

In some implementations, the preset condition includes: a width of the current block being greater than or equal to a first threshold; and/or a height of the current block being greater than or equal to a second threshold.

In some implementations, intra template matching prediction is performed on the current block based on a plurality of reference blocks, the motion information of the current block includes a third block vector, and a value of the third block vector is determined based on values of block vectors corresponding to the plurality of reference blocks.

In some implementations, the value of the third block vector is an average value of the values of the block vectors corresponding to the plurality of reference blocks.

In some implementations, intra template matching prediction is performed on the current block based on a plurality of reference blocks, the motion information of the current block includes a block vector corresponding to a third reference block, and the third reference block is determined from the plurality of reference blocks based on errors between the reconstructed block of the current block and the plurality of reference blocks.

In some implementations, the third reference block is a reference block, among the plurality of reference blocks, that has the smallest error relative to the reconstructed block.

In some implementations, the motion information buffer is used to cache motion information of picture blocks that are related to a spatial location of the target block.

It may be understood that in embodiments of this application, the term "unit" may be a partial circuit, a partial processor, a partial program or software, or the like. Certainly, the term "unit" may be a module or may be in a non-modular form. In addition, component parts in the embodiments may be integrated into one processing unit, or each of the units may exist alone physically, or two or more units may be integrated into one unit. The integrated unit may be implemented in a form of hardware, or may be implemented in a form of a software functional module.

When the integrated unit is implemented in a form of a software functional module and not sold or used as an independent product, the integrated unit may be stored in a computer-readable storage medium. Based on such an understanding, the technical solutions of embodiments essentially, or the part contributing to the conventional technology, or all or a part of the technical solutions may be implemented in a form of a software product. The computer software product is stored in a storage medium and includes several instructions for instructing a computer device (which may be a personal computer, a server, or a network device) or a processor (processor) to execute all or a part of the steps of the methods described in the embodiments. The foregoing storage medium includes various media that may store a program code, such as an USB flash drive, a removable hard disk, a read-only memory (Read-only Memory, ROM), a random access memory (Random Access Memory, RAM), a magnetic disk, or an optical disk.

Therefore, an embodiment of this application provides a computer-readable storage medium, applied to an encoder 1800. The computer-readable storage medium stores a computer program, and the computer program, when executed by a processor, causes the decoding method according to any one of the foregoing embodiments to be implemented.

Based on the composition of the encoder 1800 and the computer-readable storage medium, referring to FIG. 19, FIG. 19 is a schematic diagram of a structure of specific hardware of the encoder 1800 according to an embodiment of this application. As shown in FIG. 19, the encoder 1900 may include a communications interface 1910, a memory 1920, and a processor 1930. The components are coupled together through a bus system 1940. It may be understood that the bus system 1940 is configured to implement connection and communication between these components. The bus system 1940 may further include a power bus, a control bus, a status signal bus, and the like in addition to a data bus. However, for clarity of description, various buses are marked as the bus system 1940 in FIG. 19.

The communications interface 1910 is configured to receive and transmit signals in a process of transmitting and receiving information with other external network elements.

The memory 1920 is configured to store a computer program.

The processor 1930 is configured to run the computer program to execute the following operations:

performing intra template matching prediction on a current block to determine a prediction block and motion information of the current block;

determining a residual block of the current block based on the prediction block of the current block; and

storing the motion information of the current block into a motion information buffer corresponding to the current block, where the motion information in the motion information buffer is used for constructing a merge candidate set for a target block, and prediction of the target block is based on intra block copy.

It may be understood that the memory 1920 in the embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DRRAM). The memory 1920 in the systems and the methods described in this application includes but is not limited to these memories and any memory of another appropriate type.

However, the processor 1930 may be an integrated circuit chip having a signal processing capability. In an implementation process, steps in the foregoing methods can be implemented by using a hardware integrated logical circuit in the processor 1930, or by using instructions in a form of software. The processor 1930 may be a general-purpose processor, a digital signal processor (Digital Signal Processor, DSP), an application-specific integrated circuit (Application Specific Integrated Circuit, ASIC), a field-programmable gate array (Field Programmable Gate Array, FPGA) or another programmable logic device, a discrete gate or a transistor logic device, or a discrete hardware component. The processor may implement or execute the methods, steps, and logical block diagrams disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory 1920, and the processor 1930 reads information in the memory 1920 and completes the steps of the foregoing methods in combination with hardware of the processor.

It may be understood that these embodiments described in this application may be implemented by hardware, software, firmware, middleware, microcode, or a combination thereof. For hardware implementation, the processing unit may be implemented in one or more application-specific integrated circuits (Application Specific Integrated Circuits, ASIC), digital signal processors (Digital Signal Processing, DSP), digital signal processing devices (DSP Device, DSPD), programmable logic devices (Programmable Logic Device, PLD), field programmable gate arrays (Field-Programmable Gate Array, FPGA), general-purpose processors, controllers, microcontrollers, microprocessors, and other electronic units configured to perform the functions described in this application, or a combination thereof. For software implementation, the techniques described in this application can be implemented by modules (e.g., processes, functions, etc.) that perform the functions described in this application. Software code may be stored in a memory and executed by a processor. The memory can be implemented in or outside the processor.

Optionally, in another embodiment, the processor 1930 is further configured to run the computer program to perform the encoding method according to the foregoing embodiments.

As shown in FIG. 20, an embodiment of this application further provides a recording method. The recording method is used to record a bitstream into a recording medium. The recording method includes a recording step 2010 of recording, into the recording medium, a bitstream generated by using the encoding method according to any one of the foregoing embodiments.

An embodiment of this application further provides a computer-readable storage medium, where the computer-readable storage medium stores a bitstream generated by using the encoding method according to any one of the foregoing embodiments.

It should be noted that, in this application, the terms "include", "comprise", or their any other variant are intended to cover a non-exclusive inclusion, so that a process, a method, an article, or an apparatus that includes a list of elements not only includes those elements but also includes other elements which are not expressly listed, or further includes elements inherent to such process, method, article, or apparatus. In the absence of further restrictions, the element limited by the sentence "including a ......" does not exclude the existence of other identical elements in the process, method, item or device including this element.

The sequence numbers of the embodiments of this application are only for description, and do not represent superiority or inferiority of the embodiments.

The disclosed methods provided in the several method embodiments of this application may be randomly combined with each other in the case of no conflicts, to obtain new method embodiments.

The disclosed features provided in the several product embodiments of this application may be randomly combined with each other in the case of no conflicts, to obtain new product embodiments.

The disclosed features provided in the several method or device embodiments of this application may be randomly combined with each other in the case of no conflicts, to obtain new method embodiments or device embodiments.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A decoding method, applied to a decoder, wherein the decoding method comprises:

   performing intra template matching prediction on a current block to determine a prediction block and motion information of the current block;
   determining a reconstructed block of the current block based on the prediction block of the current block and a residual block of the current block; and
   storing the motion information of the current block into a motion information buffer corresponding to the current block, wherein the motion information in the motion information buffer is used for constructing a merge candidate set for a target block, and prediction of the target block is based on intra block copy.

2. The method according to claim 1, wherein the motion information of the current block comprises first identification information, and the first identification information is used to indicate whether a filtering-based prediction mode is used for the current block.

3. The method according to claim 2, wherein

   in a case that the filtering-based prediction mode is used for the current block, and prediction of the target block is based on the motion information of the current block, the filtering-based prediction mode is used for the target block; or
   in a case that the filtering-based prediction mode is used for the current block, and prediction of the target block is based on the motion information of the current block, whether to use the filtering-based prediction mode for the target block is determined based on a template difference between the target block and the current block.

4. The method according to claim 2, wherein in a case that the filtering-based prediction mode is used for the current block, a prediction mode based on a transform model is used for the target block.

5. The method according to claim 4, wherein the transform model is a local illumination compensation model.

6. The method according to any one of claims 2 to 5, wherein the method further comprises:
   parsing a bitstream to determine second identification information, wherein the second identification information is used to indicate whether the motion information of the current block comprises the first identification information.

7. The method according to claim 6, wherein the current block belongs to a first picture frame or a first picture frame sequence, and the second identification information corresponds to the first picture frame or the first picture frame sequence.

8. The method according to any one of claims 2 to 5, wherein in a case that a size of the current block satisfies a preset condition, the motion information of the current block comprises the first identification information.

9. The method according to claim 8, wherein the preset condition comprises:

a width of the current block being greater than or equal to a first threshold; and/or
a height of the current block being greater than or equal to a second threshold.

10. The method according to claim 1, wherein intra template matching prediction is performed on the current block based on a plurality of reference blocks, the motion information of the current block comprises third identification information, and the third identification information is used to indicate that a prediction direction of the current block is bidirectional.

11. The method according to claim 10, wherein in a case that prediction of the target block is based on the motion information of the current block, a bidirectional intra block copy mode is used for predicting the target block.

12. The method according to claim 10, wherein the motion information of the current block comprises a first block vector and a second block vector, the first block vector is a forward block vector corresponding to the current block, the second block vector is a backward block vector corresponding to the current block, and the first block vector and the second block vector are determined based on block vectors corresponding to the plurality of reference blocks.

13. The method according to claim 12, wherein the first block vector is a block vector corresponding to a first reference block among the plurality of reference blocks, the second block vector is a block vector corresponding to a second reference block among the plurality of reference blocks, and the first reference block and the second reference block are two reference blocks, among the plurality of reference blocks, that have the smallest template differences relative to the current block.

14. The method according to any one of claims 10 to 13, wherein the method further comprises:
parsing a bitstream to determine fourth identification information, wherein the fourth identification information is used to indicate whether the motion information of the current block comprises the third identification information.

15. The method according to claim 14, wherein the current block belongs to a first picture frame or a first picture frame sequence, and the fourth identification information corresponds to the first picture frame or the first picture frame sequence.

16. The method according to any one of claims 10 to 13, wherein in a case that a size of the current block satisfies a preset condition, the motion information of the current block comprises the third identification information.

17. The method according to claim 16, wherein the preset condition comprises:

a width of the current block being greater than or equal to a first threshold; and/or
a height of the current block being greater than or equal to a second threshold.

18. The method according to claim 1, wherein intra template matching prediction is performed on the current block based on a plurality of reference blocks, the motion information of the current block comprises a third block vector, and a value of the third block vector is determined based on values of block vectors corresponding to the plurality of reference blocks.

19. The method according to claim 18, wherein the value of the third block vector is an average value of the values of the block vectors corresponding to the plurality of reference blocks.

20. The method according to claim 1, wherein intra template matching prediction is performed on the current block based on a plurality of reference blocks, the motion information of the current block comprises a block vector corresponding to a third reference block, and the third reference block is determined from the plurality of reference blocks based on errors between the reconstructed block of the current block and the plurality of reference blocks.

21. The method according to claim 20, wherein the third reference block is a reference block, among the plurality of reference blocks, that has the smallest error relative to the reconstructed block.

22. The method according to any one of claims 1 to 21, wherein the motion information buffer is used to cache motion information of picture blocks that are related to a spatial location of the target block.

23. An encoding method, applied to an encoder, wherein the encoding method comprises:

performing intra template matching prediction on a current block to determine a prediction block and motion information of the current block;
determining a residual block of the current block based on the prediction block of the current block; and
storing the motion information of the current block into a motion information buffer corresponding to the current block, wherein the motion information in the motion information buffer is used for constructing a merge candidate set for a target block, and prediction of the target block is based on intra block copy.

24. The method according to claim 23, wherein the motion information of the current block comprises first identification information, and the first identification information is used to indicate whether a filtering-based prediction mode is used for the current block.

25. The method according to claim 24, wherein

in a case that the filtering-based prediction mode is used for the current block, and prediction of the target block is based on the motion information of the current block, the filtering-based prediction mode is used for the target block; or
in a case that the filtering-based prediction mode is used for the current block, and prediction of the target block is based on the motion information of the current block, whether to use the filtering-based prediction mode for the target block is determined based on a template difference between the target block and the current block.

26. The method according to claim 24, wherein in a case that the filtering-based prediction mode is used for the current block, a prediction mode based on a transform model is used for the target block.

27. The method according to claim 26, wherein the transform model is a local illumination compensation model.

28. The method according to any one of claims 24 to 27, wherein the method further comprises:
encoding the second identification information, and writing encoded bits into a bitstream, wherein the second identification information is used to indicate whether the motion information of the current block comprises the first identification information.

29. The method according to claim 28, wherein the current block belongs to a first picture frame or a first picture frame sequence, and the second identification information corresponds to the first picture frame or the first picture frame sequence.

30. The method according to any one of claims 24 to 27, wherein in a case that a size of the current block satisfies a preset condition, the motion information of the current block comprises the first identification information.

31. The method according to claim 30, wherein the preset condition comprises:

a width of the current block being greater than or equal to a first threshold; and/or
a height of the current block being greater than or equal to a second threshold.

32. The method according to claim 23, wherein intra template matching prediction is performed on the current block based on a plurality of reference blocks, the motion information of the current block comprises third identification information, and the third identification information is used to indicate that a prediction direction of the current block is bidirectional.

33. The method according to claim 32, wherein in a case that prediction of the target block is based on the motion information of the current block, a bidirectional intra block copy mode is used for predicting the target block.

34. The method according to claim 32, wherein the motion information of the current block comprises a first block vector and a second block vector, the first block vector is a forward block vector corresponding to the current block, the second block vector is a backward block vector corresponding to the current block, and the first block vector and the second block vector are determined based on block vectors corresponding to the plurality of reference blocks.

35. The method according to claim 34, wherein the first block vector is a block vector corresponding to a first reference block among the plurality of reference blocks, the second block vector is a block vector corresponding to a second reference block among the plurality of reference blocks, and the first reference block and the second reference block are two reference blocks, among the plurality of reference blocks, that have the smallest template differences relative to the current block.

36. The method according to any one of claims 32 to 35, wherein the method further comprises:
encoding fourth identification information, and writing encoded bits into a bitstream, wherein the fourth identification information is used to indicate whether the motion information of the current block comprises the third identification information.

37. The method according to claim 36, wherein the current block belongs to a first picture frame or a first picture frame sequence, and the fourth identification information corresponds to the first picture frame or the first picture frame sequence.

38. The method according to any one of claims 32 to 35, wherein in a case that a size of the current block satisfies a preset condition, the motion information of the current block comprises the third identification information.

39. The method according to claim 38, wherein the preset condition comprises:

a width of the current block being greater than or equal to a first threshold; and/or
a height of the current block being greater than or equal to a second threshold.

40. The method according to claim 23, wherein intra template matching prediction is performed on the current block based on a plurality of reference blocks, the motion information of the current block comprises a third block vector, and a value of the third block vector is determined based on values of block vectors corresponding to the plurality of reference blocks.

41. The method according to claim 40, wherein the value of the third block vector is an average value of the values of the block vectors corresponding to the plurality of reference blocks.

42. The method according to claim 23, wherein intra template matching prediction is performed on the current block based on a plurality of reference blocks, the motion information of the current block comprises a block vector corresponding to a third reference block, and the third reference block is determined from the plurality of reference blocks based on errors between the reconstructed block of the current block and the plurality of reference blocks.

43. The method according to claim 42, wherein the third reference block is a reference block, among the plurality of reference blocks, that has the smallest error relative to the reconstructed block.

44. The method according to any one of claims 23 to 43, wherein the motion information buffer is used to cache motion information of picture blocks that are related to a spatial location of the target block.

45. A decoder, comprising:

a first decoding unit, configured to perform intra template matching prediction on a current block to determine a prediction block and motion information of the current block;
a second decoding unit, configured to determine a reconstructed block of the current block based on the prediction block of the current block and a residual block of the current block; and
a storage unit, configured to store the motion information of the current block into a motion information buffer corresponding to the current block, wherein the motion information in the motion information buffer is used for constructing a merge candidate set for a target block, and prediction of the target block is based on intra block copy.

46. A decoder, wherein the decoder comprises:

a memory, configured to store a computer program; and
a processor, configured to execute the method according to any one of claims 1 to 22 when running the computer program.

47. An encoder, comprising:

a first encoding unit, configured to perform intra template matching prediction on a current block to determine a prediction block and motion information of the current block;
a second encoding unit, configured to determine a residual block of the current block based on the prediction block of the current block; and
a storage unit, configured to store the motion information of the current block into a motion information buffer corresponding to the current block, wherein the motion information in the motion information buffer is used for constructing a merge candidate set for a target block, and prediction of the target block is based on intra block copy.

48. An encoder, wherein the encoder comprises:

a memory, configured to store a computer program; and
a processor, configured to execute the method according to any one of claims 23 to 44 when running the computer program.

49. A computer-readable storage medium, wherein the computer-readable storage medium stores a computer program, and the computer program, when executed, implements the method according to any one of claims 1 to 22 or the method according to any one of claims 23 to 44.

50. A recording method, recording a bitstream into a recording medium, wherein the recording method comprises a recording step of recording, into the recording medium, a bitstream generated by using the encoding method according to any one of claims 23 to 44.

51. A computer-readable storage medium, wherein the computer-readable storage medium stores a bitstream generated by using the encoding method according to any one of claims 23 to 44.

Video encoder 100

Input a video stream

120

Residual block

Transform/Quantization unit 130

Quantized transform coefficient

Prediction block

Prediction unit 110

Inter prediction unit 111

Intra prediction unit 112

150

Reconstructed block

Inverse transform/ quantization unit 140

In-loop filtering unit 160

Decoded picture buffer 170

Entropy encoding unit 180

Bitstream

FIG. 1

Video decoder 200

Bitstream

Entropy decoding unit 210

Prediction unit 220

Inter prediction unit 221

Intra prediction unit 222

Inverse quantization/ transform unit 230

240

In-loop filtering unit 250

Decoded picture buffer 260

Video data

FIG. 2

| | Template region | | Reconstructed region | | Search region |

FIG. 3

| | Template region | ← Block vector | ↔ Template difference |

FIG. 4

(a) Perform template matching with a
step size of S (S > 1)

(b) Perform template matching with a
step size of S' ($1 \leq S' < S$)

| | | |
|---|---|---|
| ▢ Template region | ← Block vector | ⋯ Matching block |

FIG. 5

$W1*$ | Reference block 1 | $+ W2*$ | Reference block 2 | $+ W3*$ | Reference block 3

↓

Prediction block

| | | | |
|---|---|---|---|
| ▢ Template region | ⧄ Reconstructed region | ▦ Search region | ← Block vector |

FIG. 6

FIG. 7

FIG. 8

FIG. 9

FIG. 10

FIG. 11

FIG. 12

Tcur

Current
block

Tref

Reference
block

▢ Reconstructed pixels

FIG. 13

Tref

Tref'

$Tref * \alpha + \beta$

Perform intra template matching prediction on a current block to determine a prediction block and motion information of the current block — S1410

Determine a reconstructed block of the current block based on the prediction block of the current block and a residual block of the current block — S1420

Store the motion information of the current block in a motion information buffer corresponding to the current block — S1430

FIG. 14

Perform intra template matching prediction on a current block to determine a prediction block and motion information of the current block — S1510

Determine a residual block of the current block based on the prediction block of the current block — S1520

Store the motion information of the current block in a motion information buffer corresponding to the current block — S1530

FIG. 15

Decoder 1600

First decoding unit 1610

Second decoding unit 1620

Storage unit 1630

FIG. 16

Decoder
1700

1710

Communications
interface

1740

1730

Processor

1720

Memory

FIG. 17

Decoder 1800

First encoding unit
1810

Second encoding
unit 1820

Storage unit 1830

FIG. 18

Encoder
1900

1910

Communications
interface

1940

1930

Processor

1920

Memory

FIG. 19

Record, into a recording medium, a bitstream generated by using an
encoding method

S2010

FIG. 20

## INTERNATIONAL SEARCH REPORT

| | International application No. |
|---|---|
| | **PCT/CN2023/122804** |

| A. | CLASSIFICATION OF SUBJECT MATTER |
|---|---|

H04N 19/176(2014.01)i

According to International Patent Classification (IPC) or to both national classification and IPC

| B. | FIELDS SEARCHED |
|---|---|

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT, JVET: 帧内, 模板匹配, 预测, 当前, 目标, 参考, 标识, 运动信息, 块复制, 缓存, 存储, 合并, 候选, 列表, 集合, 模式, 变换, 模型, 局部光照补偿, 误差, 宽度, 高度, 阈值, intra, template, match, prediction, IntraTMP, current, target, reference, flag, block vector, intra block copy, IBC,store, add, buffer, merge, candidate, list, group, filter, mode, LIC, model, error, height, width, threshold

| C. | DOCUMENTS CONSIDERED TO BE RELEVANT |
|---|---|

| Category* | Citation of document, with indication, where appropriate, of the relevant passages | Relevant to claim No. |
|---|---|---|
| X | LIM, W. et al. "AHG12: Using Block Vector Derived from IntraTMP for IBC" *Joint Video Experts Team (JVET) of ITU-T SG 16 WP 3 and ISO/IEC JTC 1/SC 29, JVET-AA0053-v1*, 22 July 2022 (2022-07-22), pages 1-3 | 1, 23, 45-51 |
| Y | LIM, W. et al. "AHG12: Using Block Vector Derived from IntraTMP for IBC" *Joint Video Experts Team (JVET) of ITU-T SG 16 WP 3 and ISO/IEC JTC 1/SC 29, JVET-AA0053-v1*, 22 July 2022 (2022-07-22), pages 1-3 | 2, 6-22, 24, 28-51 |
| Y | ZHANG, Lai et al. "Crosscheck of JVET-AE0159 (EE2-2.5c: Filtered Intra Block Copy (FIBC)" *Joint Video Experts Team (JVET) of ITU-T SG 16 WP 3 and ISO/IEC JTC 1/SC 29, Document: JVET-AE0228-v2*, 19 July 2023 (2023-07-19), abstract | 2, 6-9, 24, 28-31 |
| Y | CN 114073079 A (QUALCOMM INC.) 18 February 2022 (2022-02-18) description, paragraphs 0027-0187 | 8-22, 30-44 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 June 2024** | **21 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/122804**

| C. | DOCUMENTS CONSIDERED TO BE RELEVANT | |
|---|---|---|
| Category* | Citation of document, with indication, where appropriate, of the relevant passages | Relevant to claim No. |
| X | US 2023075788 A1 (TENCENT AMERICA LLC.) 09 March 2023 (2023-03-09) description, paragraphs 0161-0207 | 1, 23, 45-51 |
| A | US 2022166986 A1 (LG ELECTRONICS INC.) 26 May 2022 (2022-05-26) entire document | 1-51 |
| A | CN 107079161 A (HFI INNOVATION INC.) 18 August 2017 (2017-08-18) entire document | 1-51 |

**INTERNATIONAL SEARCH REPORT**
Information on patent family members

International application No.

**PCT/CN2023/122804**

| Patent document cited in search report | | | Publication date (day/month/year) | Patent family member(s) | | | Publication date (day/month/year) |
|---|---|---|---|---|---|---|---|
| CN | 114073079 | A | 18 February 2022 | KR | 20220030993 | A | 11 March 2022 |
| | | | | EP | 3997882 | A1 | 18 May 2022 |
| | | | | US | 2021014524 | A1 | 14 January 2021 |
| | | | | US | 11528504 | B2 | 13 December 2022 |
| | | | | WO | 2021007547 | A1 | 14 January 2021 |
| | | | | TW | 202110183 | A | 01 March 2021 |
| US | 2023075788 | A1 | 09 March 2023 | EP | 4205387 | A1 | 05 July 2023 |
| | | | | EP | 4205387 | A4 | 14 February 2024 |
| | | | | JP | 2023549155 | A | 22 November 2023 |
| | | | | WO | 2023034782 | A1 | 09 March 2023 |
| | | | | KR | 20230075499 | A | 31 May 2023 |
| US | 2022166986 | A1 | 26 May 2022 | WO | 2020185043 | A1 | 17 September 2020 |
| CN | 107079161 | A | 18 August 2017 | US | 2017280159 | A1 | 28 September 2017 |
| | | | | US | 10027981 | B2 | 17 July 2018 |
| | | | | EP | 3180917 | A1 | 21 June 2017 |
| | | | | EP | 3180917 | A4 | 21 March 2018 |
| | | | | EP | 3180917 | B1 | 20 April 2022 |
| | | | | KR | 20170046770 | A | 02 May 2017 |
| | | | | KR | 102034938 | B1 | 21 October 2019 |
| | | | | WO | 2016034058 | A1 | 10 March 2016 |

Form PCT/ISA/210 (patent family annex) (July 2022)